# EUROPEAN PATENT APPLICATION

(11) **EP 4 460 017 A1**
(43) Date of publication of application: **06.11.2024**
(21) Application number: 22915661.7
(22) Date of filing: 06.12.2022
(51) Int. Cl.: H04N 23/60, G06T 15/20, G06T 19/00

(54) **INFORMATION PROCESSING DEVICE, IMAGE PROCESSING METHOD, AND PROGRAM**

(30) Priority: 28.12.2021 JP 2021214015
(71) Applicant: Sony Group Corporation, Tokyo 108-0075 (JP)
(72) Inventor: HATTORI, Hironori, Tokyo 108-0075 (JP); INO, Kentaro, Tokyo 108-0075 (JP); OGURA, Sho, Tokyo 108-0075 (JP)
(74) Representative: D Young & Co LLP
(86) International application number: PCT/JP2022/044949
(87) International publication number: WO 2023/127430

(57) **Abstract**

An information processing device includes an image processing unit configured to perform processing of outputting, in response to a trigger, a virtual image generated on the basis of estimation information regarding a subject generated on the basis of at least one of a captured image or sensor information and a three-dimensional model of the subject in a case where a live-action image captured by an imaging device is output.

## Description

### TECHNICAL FIELD

The present technology relates to an information processing device, an image processing method, and a program, and more particularly, to a technology field for performing processing on a live-action image and a virtual image.

### BACKGROUND ART

In recent years, in a play of soccer, basketball, or the like, there has been known a technology for estimating a posture and position of a player/referee, a position/rotation of a ball, and the like in a designated field from an image obtained by a dedicated camera or information obtained by a sensor (acceleration sensor or GPS sensor) attached to a player or a ball as an electronic performance and tracking systems (EPTS).

A reproduced image of a play can also be generated as a virtual image based on EPTS data using computer graphics (CG).

Furthermore, in the virtual image by CG, it is possible to generate an image viewed from various viewpoints. Such an image is useful as a replay image in a sports broadcast.

Patent Document 1 discloses a technology related to generation of a camerawork that can be regarded as a movement trajectory of a viewpoint.

Patent Document 2 discloses a technology capable of easily grasping a proficiency level of an action, an improvement point of a posture, and the like by specifying a target moving image and a comparative moving image from among a plurality of moving images obtained by capturing an action of a person who performs a ball game.

### CITATION LIST

### PATENT DOCUMENT

Patent Document 1: WO 2018/030206 A
Patent Document 2: Japanese Patent Application Laid-Open No. 2021-145702

### SUMMARY OF THE INVENTION

### PROBLEMS TO BE SOLVED BY THE INVENTION

These various image processing technologies exist, but it is considered that new image representation can be executed by more effectively using a live-action image and a CG image.

Therefore, the present disclosure proposes an image processing technology capable of appropriately providing a user with a live-action image and a virtual image by CG or the like.

### SOLUTIONS TO PROBLEMS

According to the present technology, there is provided an information processing device including
an image processing unit configured to perform processing of outputting, in response to a trigger, a virtual image generated on the basis of estimation information regarding a subject generated on the basis of at least one of a captured image or sensor information and a three-dimensional model of the subject in a case where a live-action image captured by an imaging device is output.

For example, when the live-action image is output for display output, the virtual image is output in response to a trigger based on a manual operation or an automatic determination. For example, the live-action image is switched to the virtual image, or the virtual image is output in addition to the live-action image.

### BRIEF DESCRIPTION OF DRAWINGS

Fig. 1 is an explanatory diagram of an overview of image processing according to an embodiment of the present technology.
Fig. 2 is a block diagram of an image processing system according to the embodiment.
Fig. 3 is a block diagram of an information processing device constituting an image processing system according to the embodiment.
Fig. 4 is an explanatory diagram for describing switching between a live-action image and a CG image according to the embodiment.
Fig. 5 is an explanatory diagram for changing a viewpoint of a CG image according to the embodiment.
Fig. 6 is an explanatory diagram for describing switching to a CG image of a player viewpoint according to the embodiment.
Fig. 7 is an explanatory diagram for describing mode transition according to the embodiment.
Fig. 8 is a flowchart illustrating processing of manual image switching according to the embodiment.
Fig. 9 is an explanatory diagram for describing image switching by camera designation according to the embodiment.
Fig. 10 is a flowchart illustrating processing of image switching by camera designation according to the embodiment.
Fig. 11 is an explanatory diagram for describing transition setting on a timeline according to the embodiment.
Fig. 12 is a flowchart illustrating processing of automatic image switching according to the embodiment.
Fig. 13 is a flowchart illustrating processing of automatic image switching according to the embodiment.
Fig. 14 is an explanatory diagram for describing an image example according to the embodiment.
Fig. 15 is a flowchart illustrating processing of automatic image switching according to the embodiment.
Fig. 16 is an explanatory diagram for describing an image example according to the embodiment.
Fig. 17 is a flowchart illustrating processing of automatic image switching according to the embodiment.
Fig. 18 is a block diagram of an image processing system that generates a live-action free viewpoint image according to the embodiment.
Fig. 19 is an explanatory diagram for describing mode transition according to the embodiment.

### MODE FOR CARRYING OUT THE INVENTION

Hereinafter, an embodiment will be described in the following order.
<1. Overview of image processing system>
<2. Image processing system including EPTS>
<3. Manual image switching example>
<4. Automatic image switching example>
<5. Image switching including live-action free viewpoint image>
<6. Output of live-action image and CG image>
<7. Conclusion and modification example>

Note that in the present disclosure, an "image" includes both a moving image and a still image. Although image processing for the moving image will be mainly described as an example in the embodiment, an image to be processed is not limited to the moving image, and may be the still image or a slide show using a plurality of the still images.

Furthermore, the "image" refers to an image actually displayed on a screen, but the "image" in a signal processing process or a transmission path until being displayed on the screen refers to image data.

### <1. Overview of image processing system>

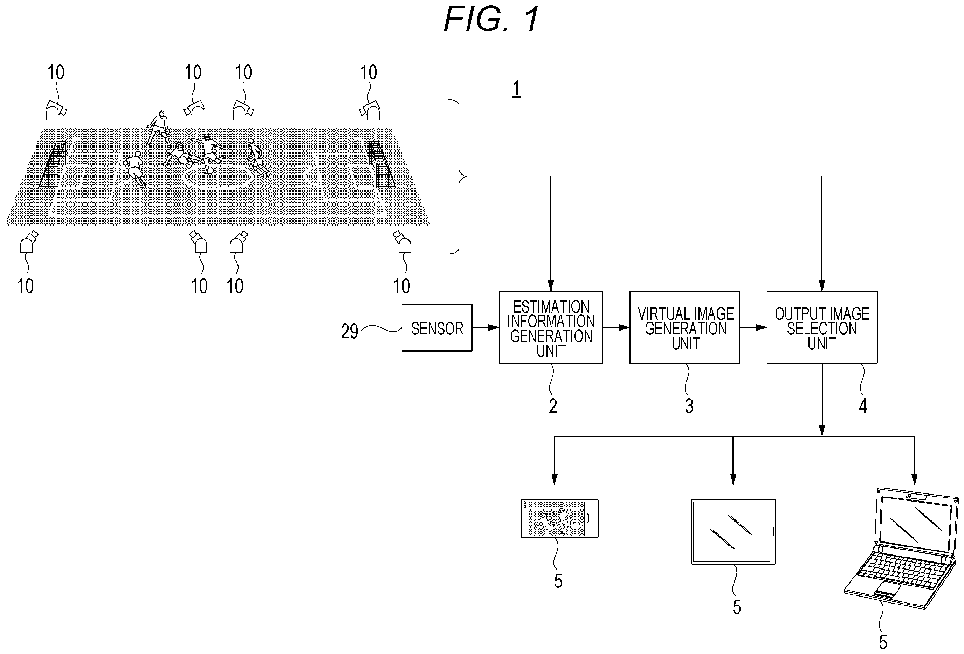

Fig. 1 illustrates an overview of an image processing system 1.

The image processing system 1 in Fig. 1 includes an imaging device 10, an estimation information generation unit 2, a virtual image generation unit 3, an output image selection unit 4, and a terminal device 5. These are connected via wired communication, wireless communication, or network communication. A sensor 29 may be provided.

A plurality of the imaging devices 10 images, for example, an area of a subject in a sports venue for a soccer or like, for example, a stadium where a game is being played, from various positions.

An example of the imaging device 10 includes an imaging device that captures an image for generating estimation information. The estimation information indicates various types of information regarding the subject estimated from the image.

Furthermore, an example of the imaging device 10 includes an imaging device that captures a live-action image for distribution or broadcasting.

Some or all of the captured images of the imaging device 10 may be used as a live-action image for distribution or broadcasting, and may be used as an image for generating estimation information. That is, the imaging device 10 for obtaining the estimation information and the imaging device 10 for obtaining the live-action image may be clearly separately provided, or may be shared.

The terminal device 5 is an information processing device such as a smartphone, a tablet terminal, or a personal computer, and is a device that displays a live-action image or a CG image in the present system.

As the terminal device 5, a device used by a person involved in a team, such as a manager, a coach, a player, or a staff, a spectator such as a fan, a staff who performs work of explaining or analyzing a game, or the like is assumed.

The estimation information generation unit 2, the virtual image generation unit 3, and the output image selection unit 4 include one or a plurality of information processing devices.

The estimation information generation unit 2 generates estimation information regarding a subject from a plurality of captured images (moving images) obtained by one or more imaging devices 10.

As a specific example of the estimation information, there is information regarding a position, posture, and movement of a person (player or the like) or an object (ball or the like) as a subject. For example, EPTS data to be described later corresponds to the estimation information.

For example, a plurality of the imaging devices 10 images a sports venue where a soccer game is being played from various positions. The estimation information generation unit 2 can receive images captured by these imaging devices 10 and perform image analysis processing to generate estimation information. That is, information regarding the position of each player, posture determination based on skeleton capture of each player, and the position of the ball is generated from each frame of the image.

Furthermore, for example, one or more acceleration sensors and/or one or more GPS sensors may be attached to a ball used in sports, a uniform worn by a person performing sports, shoes worn by a person, a wristwatch, or the like. The estimation information generation unit 2 receives acceleration information and position information obtained by these sensors 29, and can generate estimation information on the basis of these pieces of information.

The virtual image generation unit 3 generates a 3D CG image on the basis of the estimation information generated by the estimation information generation unit 2 and a 3D (three-dimensional) model of the subject.

For example, the virtual image generation unit 3 can create a 3D image of a game by CG by using a virtual 3D model of a subject (player or the like) created by CG and using a position, posture, movement, and the like of each player as the estimation information.

The output image selection unit 4 receives the live-action image captured by the imaging device 10 and the CG image generated by the virtual image generation unit 3, and outputs one or both of the live-action image and the CG image.

The output image selection unit 4 performs switching between a state in which the live-action image is displayed and a state in which the CG image is displayed on the terminal device 5, or performs switching to a state in which both the live-action image and the CG image are displayed.

The image processing device having the functions of the estimation information generation unit 2, the virtual image generation unit 3, and the output image selection unit 4 described above may be implemented by, for example, a computer device installed in a game venue. Furthermore, such a computer device may be used as the terminal device 5.

Furthermore, all or some of the functions of the estimation information generation unit 2, the virtual image generation unit 3, and the output image selection unit 4 may be implemented by different information processing devices, respectively.

For example, the estimation information generation unit 2 and the virtual image generation unit 3 may be provided in the computer device installed in the game venue, and the output image selection unit 4 may be provided in the terminal device 5.

Furthermore, the estimation information generation unit 2 may be provided in the computer device installed in the game venue, and the virtual image generation unit 3 and the output image selection unit 4 may be provided in the terminal device 5.

Furthermore, an information processing device that performs a cloud computing service may be included.

For example, considering an information processing device installed in a game venue or near the game venue, an information processing device as a cloud server, and an information processing device as the terminal device 5, for example, the following configurations (a), (b), (c), and (d) are assumed.

### (a)

The information processing device installed in the venue includes the estimation information generation unit 2.

The cloud server includes the virtual image generation unit 3.

The terminal device 5 includes the output image selection unit 4.

In this case, the information processing device installed in the venue inputs the image captured by the imaging device 10 in the game venue to generate estimation information, and transmits the live-action image and the estimation information to the cloud server. The cloud server generates a CG image by using the estimation information, and transmits the live-action image and the CG image to the terminal device 5. The terminal device 5 selectively or compositely displays the live-action image and the CG image.

### (b)

The cloud server includes the estimation information generation unit 2 and the virtual image generation unit 3.

The terminal device 5 includes the output image selection unit 4.

In this case, each imaging device 10 transmits the captured image (live-action image) to the cloud server. The cloud server inputs the captured image to generate estimation information, further generates a CG image by using the estimation information, and transmits the live-action image and the CG image to the terminal device 5. The terminal device 5 selectively or compositely displays the live-action image and the CG image.

### (c)

The information processing device installed in the venue includes the estimation information generation unit 2.

The cloud server includes the virtual image generation unit 3 and the output image selection unit 4.

In this case, the information processing device installed in the venue inputs the image captured by the imaging device 10 in the game venue to generate estimation information, and transmits the live-action image and the estimation information to the cloud server. The cloud server generates a CG image by using the estimation information, and selectively and compositely transmits the live-action image and the CG image to the terminal device 5.

### (d)

The cloud server includes the estimation information generation unit 2, the virtual image generation unit 3, and the output image selection unit 4.

In this case, each imaging device 10 transmits the captured image (live-action image) to the cloud server. The cloud server inputs the captured image to generate estimation information, further generates a CG image by using the estimation information, and selectively and compositely transmits the live-action image and the CG image to the terminal device 5 to display the images.

(a) to (d) described above are examples in a case where the cloud server is used, and other examples are also conceivable.

According to the system of Fig. 1, the user of the terminal device 5 can selectively or compositely view the live-action image and the CG image for a game such as soccer.

### <2. Image processing system including EPTS>

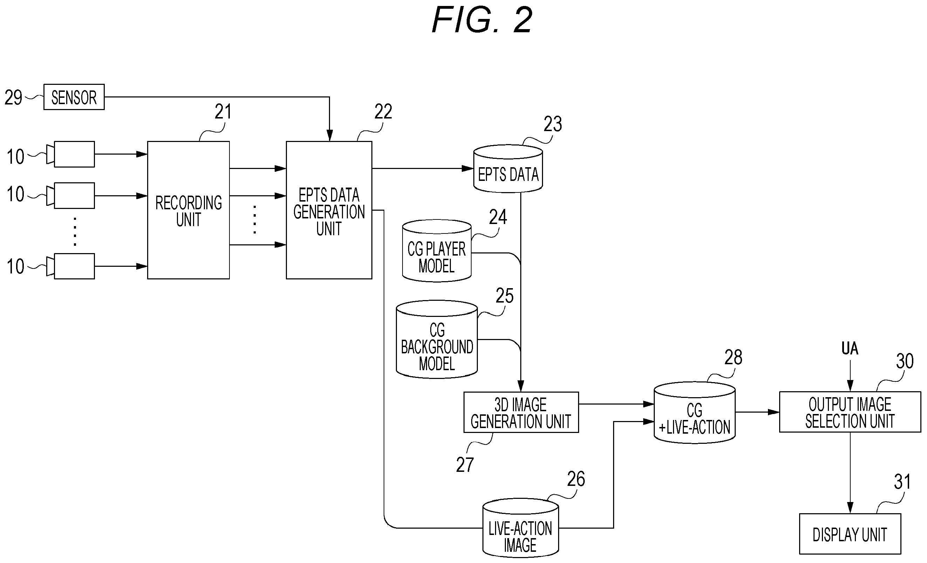

A more specific configuration example corresponding to the image processing system having the configuration of Fig. 1 will be described with reference to Fig. 2. Fig. 2 is a system configuration example including an EPTS.

For example, an EPTS data generation unit 22 corresponds to the estimation information generation unit 2, a 3D image generation unit 27 corresponds to the virtual image generation unit 3, and an output image selection unit 30 corresponds to the output image selection unit 4.

Note that a term "camera" refers to the imaging device 10 in the description of the embodiment. For example, "camera arrangement" means arrangement of a plurality of the imaging devices 10.

A plurality of the imaging devices 10 is configured as a digital camera device including an imaging element such as a charge coupled device (CCD) sensor or a complementary metal-oxide-semiconductor (CMOS) sensor, and obtains a captured image as digital data. In the present example, each imaging device 10 obtains a captured image as a moving image.

As illustrated in Fig. 1, each imaging device 10 captures an image of a scene in which a game such as soccer, basketball, baseball, golf, or tennis is being held, and each imaging device is disposed in a predetermined direction at a predetermined position in a game venue where the game takes place. Although the number of the imaging devices 10 is not particularly specified, it is advantageous that the number thereof is as large as possible in order to generate the EPTS data.

Furthermore, in the embodiment, an example of generating a live-action free viewpoint image using a 3D model based on live-action will be described. However, in order to enable generation of such a free viewpoint image, the number of imaging devices 10 may be only required to be at least two or more. The number of imaging devices 10 is increased and a target subject is imaged from more angles, so that accuracy of 3D model restoration of the subject can be improved, and an image quality of the free viewpoint image can be improved.

Each imaging device 10 captures a moving image in a synchronized state, and outputs the captured image.

A recording unit 21 records each image captured by a plurality of the imaging devices 10 and supplies each captured image to the EPTS data generation unit 22.

The EPTS data generation unit 22 performs analysis processing on each captured image, generates EPTS data individually, integrates all the individual EPTS data, and generates the EPTS data as a whole. The EPTS data includes, for example, information regarding a position of a player or a ball at each frame timing, a posture of the player or the like, a rotation speed or a rotation direction of the ball.

Furthermore, the EPTS data generation unit 22 may generate the EPTS data by using not only the captured image but also information obtained by the sensor 29, for example, information from an acceleration sensor embedded in a ball or a GPS sensor attached to a uniform of the player.

For example, the EPTS data generation unit 22 can generate, as the EPTS data of the entire game, information for determining the position and posture of all the players participating in the game at each time point, the position and state of the ball at each time point, and the like.

The EPTS data generated by the EPTS data generation unit 22 is stored in a storage 23 and can be referred to.

Note that, in Fig. 2, storages 23, 24, 25, 26, and 28 are illustrated as storage units for various types of information such as images and 3D models, and the like, and these storages include, for example, a data recording unit such as a solid state drive (SSD) or a hard disk drive (HDD), and a control unit that performs data recording/reproducing control for the data recording unit.

Since the EPTS data at each time point is stored in the storage 23, the 3D image generation unit 27 can generate an image to be obtained during the game by CG with reference to the EPTS data.

The 3D image generation unit 27 performs rendering to generate a 3D image by CG using the 3D model. As the 3D model used by the 3D image generation unit 27, a 3D model of each player (referred to as "CG player model" for description) is stored in the storage 24, and a 3D model of the background (referred to as "CG background model" for description) is stored in the storage 25.

The CG player model and the CG background model may be only required to be created in advance and stored in the storages 24 and 25, for example, before a game to be recorded.

By using the CG player model and the CG background model, and obtaining information regarding the position and posture of each player with reference to the EPTS data, the 3D image generation unit 27 can generate, as a 3D image by CG, an image representing a player, a ball, and the like in a game.

For example, a clip as a moving image by CG is generated. Since the clip is generated by CG, the clip including a free viewpoint image that is not limited to the arrangement of the imaging device 10 can be also generated.

That is, the 3D image generation unit 27 can generate a clip as a game reproduction moving image with a CG image using the EPTS data or a free viewpoint image clip by CG including a free viewpoint video.

The 3D image generated by the 3D image generation unit 27 is stored in the storage 28. Furthermore, depth information and camera path information are also stored in association with the clip. The depth information is distance information in a depth direction of a subject such as a player or a ball from the camera viewpoint, and is information for determining the anteroposterior relationship of the subject. The camera path information is information regarding a virtual viewpoint position when a clip by CG is created. For example, in a case of creating a virtual viewpoint image in which the position of the viewpoint, the line-of-sight direction, and the angle of view (focal length) of the viewpoint are changed with respect to the 3D model, the camera path information includes parameters necessary for defining a movement trajectory of the viewpoint, a change mode of the line-of-sight direction, a change mode of the angle of view, and the like.

The captured images obtained by all or some of the imaging devices 10 are also images distributed or broadcast as live-action. For example, the captured image supplied from the recording unit 21 to the EPTS data generation unit 22 is directly stored in the storage 26 as a live-action image.

The storage 26 stores the live-action images captured by a plurality of the imaging devices 10, and the live-action images to be distributed or broadcast are selected, for example, for each scene, and stored in the storage 28. For example, the selection of the live-action image may be performed under the control of the 3D image generation unit 27, or may be performed by the operation of the operator.

Therefore, for example, the live-action image and the CG image can be stored in the storage for each frame.

The output image selection unit 30 selects an image to be displayed. The display unit 31 refers to, for example, a display in the terminal device 5 in Fig. 1.

The output image selection unit 30 selects the live-action image and CG image stored in the storage 24 according to user's operation information UA, for example, a result of image analysis, and the like, and outputs the selected live-action image and CG image to the display unit 31 for display. Alternatively, both the live-action image and the CG image may be displayed on a display unit 31.

That is, the output image selection unit 30 can selectively perform processing of displaying the live-action image, processing of displaying the CG image, or processing of displaying both the live-action image and the CG image.

The user's operation information UA includes, for example, pieces of operation information such as a switching operation between a live-action image and a CG image, a viewpoint change operation, specification of a scene, and tagging of an important scene.

Furthermore, the output image selection unit 30 can perform image analysis to select an image to be output, and can acquire a camera path (information regarding a trajectory of viewpoint movement) according to a user operation or a scene. Furthermore, considering displaying of a 2D image on the display unit 31, for example, the output image selection unit 30 also performs processing of converting the 3D CG image into a 2D CG image.

In such an image processing system, the user can selectively or compositely view the live-action image and the CG image on the display unit 31, for example, through real-time broadcasting or recorded broadcasting of a game.

An example in which the configuration of Fig. 2 is applied to the example using a plurality of the information processing devices described in Fig. 1 will be described. For example, there is an example in which the recording unit 21 and the EPTS data generation unit 22 are implemented by the information processing device installed in a venue, the storages 23, 24, 25, and 26 and the 3D image generation unit 27 are implemented by a cloud server, and the storage 28, the output image selection unit 30, and the display unit 31 are implemented by the terminal device 5.

Furthermore, for example, an example in which the recording unit 21 and the EPTS data generation unit 22 are implemented by the information processing device installed in the venue, the storages 23, 24, 25, 26, and 28, the 3D image generation unit 27, and the output image selection unit 30 are implemented by the cloud server, and the display unit 31 is implemented by the terminal device 5 is also assumed.

Of course, these are merely examples, and various other implementations are conceivable.

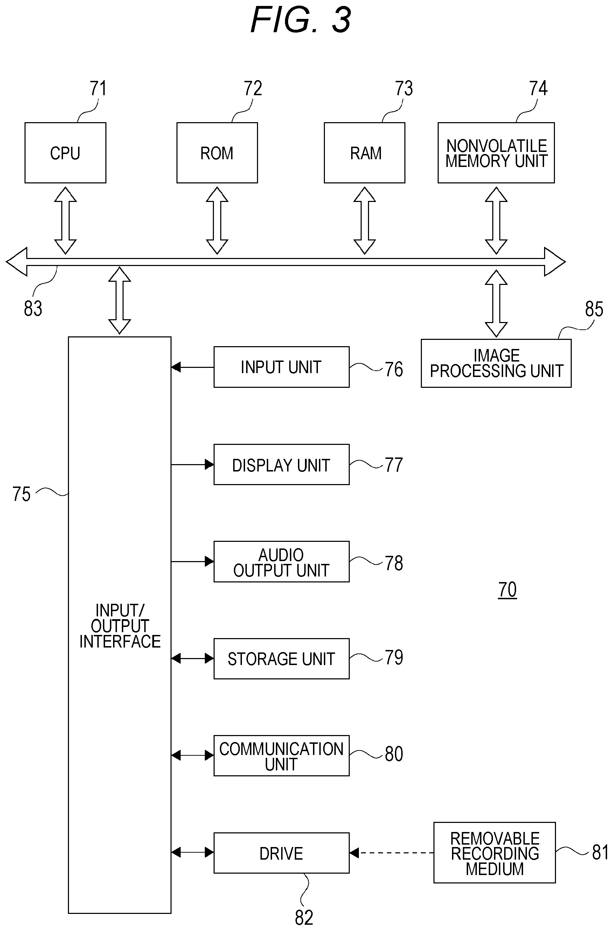

A configuration of an information processing device 70 used in the configuration described above will be described. For example, the EPTS data generation unit 22, the 3D image generation unit 27, the output image selection unit 30, and the like in Fig. 2 can be implemented by the information processing device 70 illustrated in Fig. 3 below.

In other words, an information processing device (the information processing device, the cloud server, the terminal device 5, and the like installed in the venue) that performs all or part of the functions of the estimation information generation unit 2, the virtual image generation unit 3, and the output image selection unit 4, which are illustrated in Fig. 1, can be implemented by the information processing device 70 below.

The information processing device 70 below can be configured as, for example, a dedicated workstation, a general-purpose personal computer, a mobile terminal device, and the like.

A CPU 71 of the information processing device 70 illustrated in Fig. 3 executes various processing in accordance with a program stored in a nonvolatile memory unit 74 such as a ROM 72 or, for example, an electrically erasable programmable read-only memory (EEP-ROM), or a program loaded from a storage unit 79 to a RAM 73. The RAM 73 also appropriately stores data and the like necessary for the CPU 71 to execute the various processing.

An image processing unit 85 is configured as a processor that performs various types of image processing. For example, the image processing unit 85 is a processor capable of performing any one of 3D model generation processing, free viewpoint image rendering, 3D CG image rendering, 2D image rendering, data base (DB) processing, image effect processing, image analysis processing, EPTS data generation processing, and the like.

The image processing unit 85 can be implemented by, for example, a CPU separate from the CPU 71, a graphics processing unit (GPU), a general-purpose computing on graphics processing units (GPGPU), an artificial intelligence (AI) processor, and the like.

Note that the image processing unit 85 may be provided as a function in the CPU 71.

The CPU 71, the ROM 72, the RAM 73, the nonvolatile memory unit 74, and the image processing unit 85 are connected to one another via a bus 83. An input/output interface 75 is also connected to the bus 83.

An input unit 76 including an operation element and an operation device is connected to the input/output interface 75.

For example, as the input unit 76, various types of operation elements and operation devices such as a keyboard, a mouse, a key, a dial, a touch panel, a touch pad, a remote controller, and the like are assumed.

A user operation is detected by the input unit 76, and a signal corresponding to the input operation is interpreted by the CPU 71.

Furthermore, a display unit 77 including a liquid crystal display (LCD), an organic electro-luminescence (EL) panel, or the like, and an audio output unit 78 including a speaker are integrally or separately connected to the input/output interface 75.

The display unit 77 performs various displays as a user interface. The display unit 77 includes, for example, a display device provided in a housing of the information processing device 70 and a separate display device connected to the information processing device 70.

The display unit 77 performs various kinds of image display on a display screen, on the basis of an instruction from the CPU 71. Furthermore, the display unit 77 displays various operation menus, icons, messages and the like, that is, performs display as a graphical user interface (GUI) on the basis of the instruction of the CPU 71.

For example, in a case where the information processing device 70 is considered as the terminal device 5, the display unit 77 displays the live-action image or the CG image. Furthermore, the user of the terminal device 5 can perform various operations such as image switching, viewpoint change operation, and tag setting for a scene by using the input unit 76.

There is a case where the storage unit 79 including a hard disk and a solid-state memory, and a communication unit 80 including a modem are connected to the input/output interface 75.

The communication unit 80 performs communication processing via a transmission path such as the Internet, wired/wireless communication with various devices, and communication using bus communication.

Furthermore, a drive 82 is also connected to the input/output interface 75 as necessary, and a removable recording medium 81 such as a magnetic disk, an optical disk, a magneto-optical disk, or a semiconductor memory is appropriately mounted.

By the drive 82, a data file such as an image file, various computer programs, and the like can be read from the removable recording medium 81. The read data file is stored in the storage unit 79, and images and sounds included in the data file are output by the display unit 77 and the audio output unit 78. Furthermore, the computer programs or the like read from the removable recording medium 81 are installed in the storage unit 79, as necessary.

In the information processing device 70, software can be installed through network communication by the communication unit 80 or the removable recording medium 81. Alternatively, the software may be stored in advance in the ROM 72, the storage unit 79 and the like.

Note that the storages 23, 24, 25, 26, and 28 illustrated in Fig. 2 may be implemented by the storage unit 79 of the information processing device 70 or may be implemented by a storage device separate from the information processing device 70.

### <3. Manual image switching example>

Switching of the image on the display of the terminal device 5 will be described. First, an example in which the user manually switches between the live-action image and the CG image will be described.

Note that a tap operation, a drag operation, a double-tap operation, and the like to described later are merely examples of operations, and each operation is not limited to those operation modes.

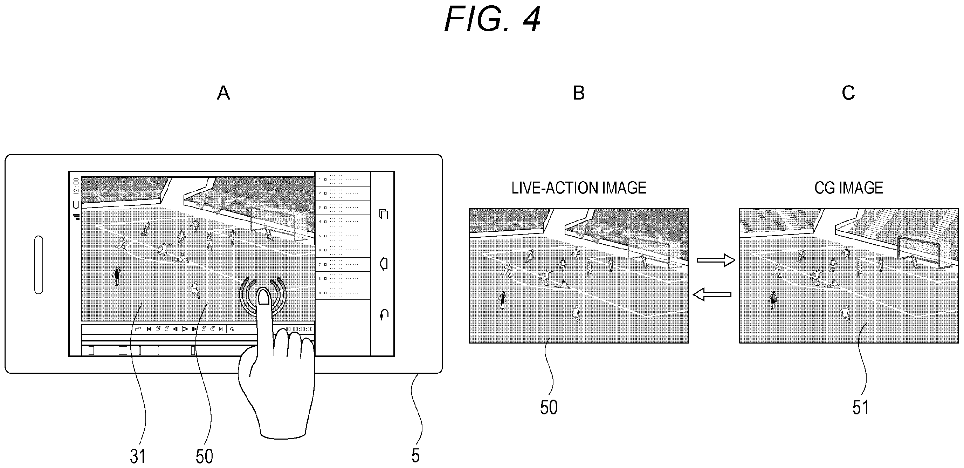

Fig. 4A illustrates a state in which an image of a soccer game is displayed on the display unit 31 of the terminal device 5. When the user performs a tap operation on the screen, the image on the display unit 31 is switched between a live-action image 50 in Fig. 4B and a CG image 51 in Fig. 4C.

In a case where the switching operation is performed from the live-action image 50 to the CG image 51 by such an operation, the CG image 51 can be an image of the same camera viewpoint as that of the immediately preceding live-action image 50.

Furthermore, when the user performs a tap operation on the screen while the CG image is displayed, the screen is switched to the live-action image 50. Although the viewpoint of the CG image can be changed, when the CG image is switched to the live-action image, the CG image is preferably switched to a live-action image by the imaging device 10, which is closest to the camera viewpoint of the immediately preceding CG image.

In this way, in the switching between the live-action image 50 and the CG image 51, it is possible to prevent the camera viewpoint from greatly changing and causing the user to feel uncomfortable.

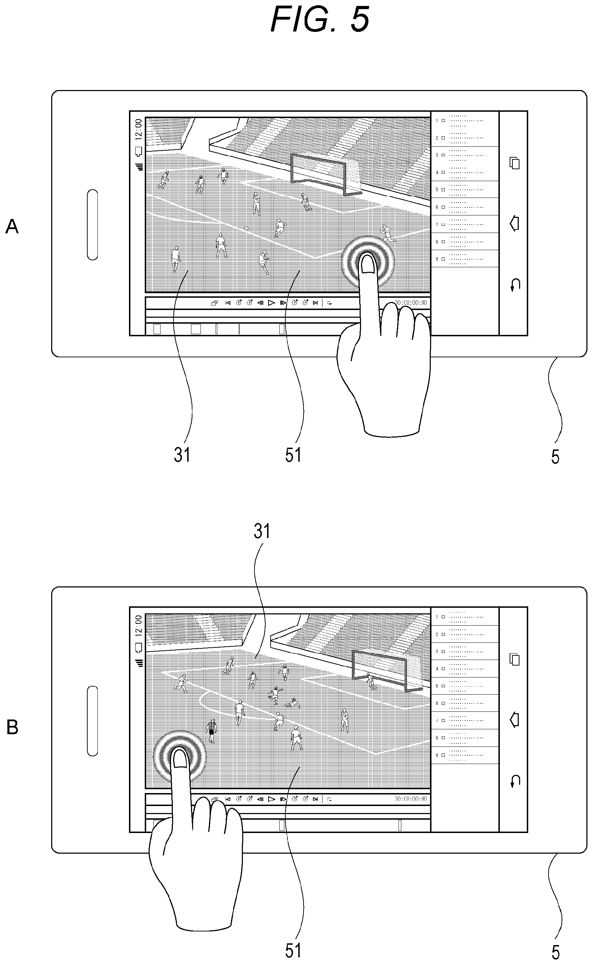

Figs. 5A and 5B illustrate how the viewpoint is changed in a state in which the CG image 51 is displayed. For example, in the state of Fig. 5A, the user performs a drag operation on the screen from the right side to the left side so that the viewpoint position moves from the right side to the left side. Fig. 5B illustrates the CG image 51 in which the viewpoint position has been changed.

When the CG image 51 capable of generating a virtual image by freely setting a viewpoint position is displayed, the viewpoint is changed in a direction corresponding to, for example, the drag operation of the user, and thus the user can view the image in a desired direction by an intuitive operation.

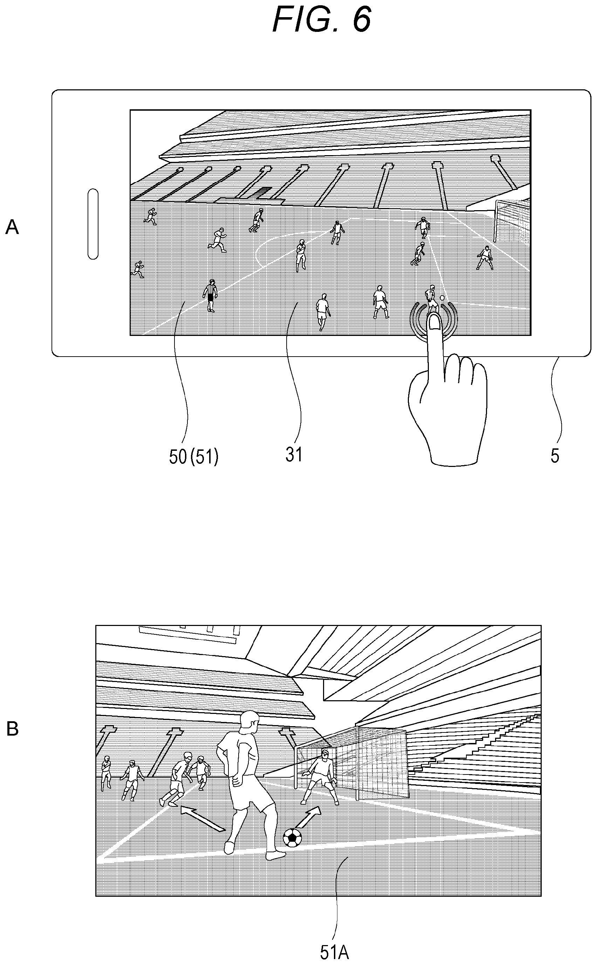

Fig. 6A illustrates a case where the user performs a double-tap operation at a position of a certain player in a state in which the live-action image 50 or the CG image 51 is displayed on the display unit 31.

In response to this operation, as illustrated in Fig. 6B, a CG image 51A at the viewpoint position as the player viewpoint designated by the user operation is displayed. By using the image of the player viewpoint, the user of the terminal device 5 can confirm, for example, a passing course from the player. As illustrated in Fig. 6B, an additional image such as an arrow indicating a passing course, a shooting course, or the like may be superimposed.

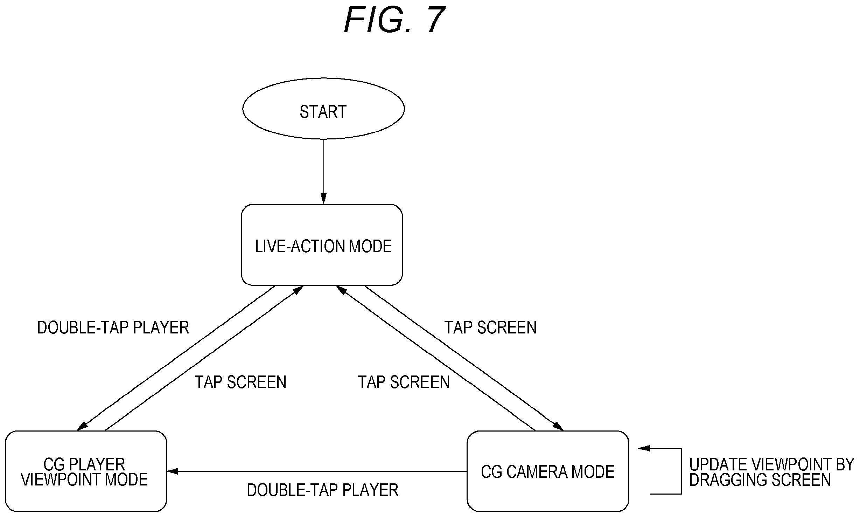

Fig. 7 illustrates a mode transition performed by the output image selection unit 30 in response to the tap operation, the drag operation, and the double-tap operation as described above.

For example, in an initial state of display start, the output image selection unit 30 is set to a live-action mode, and the live-action image 50 is displayed on the display unit 31.

When the tap operation on the screen is detected in the live-action mode, the output image selection unit 30 transitions to a CG camera mode, and the CG image 51 is displayed on the display unit 31.

When the drag operation is detected in the CG camera mode, the output image selection unit 30 changes the viewpoint position of the CG image 51 in response to the operation.

When the double-tap operation at a position of the player on the screen is detected in the live-action mode or the CG camera mode, the output image selection unit 30 transitions to a CG player viewpoint mode, and the CG image 51A of the player viewpoint is displayed on the display unit 31.

When the tap operation on the screen is detected in the CG camera mode or the CG player viewpoint mode, the output image selection unit 30 transitions to the live-action mode, and the live-action image 50 is displayed on the display unit 31.

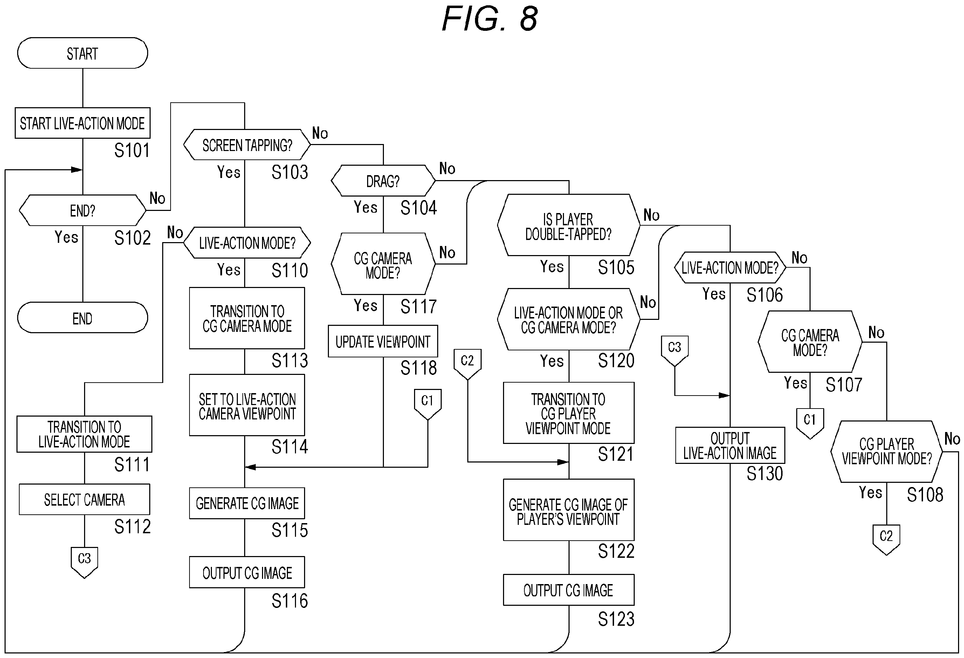

For example, Fig. 8 illustrates a processing example of selecting a display image according to the operation in such an example.

Note that Fig. 8 can be basically considered as processing of the image processing unit 85 of the information processing device 70 having a function as the output image selection unit 30. However, a part of the processing also includes processing of the image processing unit 85 of the information processing device 70 having a function of the 3D image generation unit 27. For example, the processing is processing of generating a CG image in steps S115 and S122. These can also be considered as processing executed by the 3D image generation unit 27 in response to an instruction from the output image selection unit 30.

Hereinafter, for simplification of description, processing of the image processing unit 85 having functions as the output image selection unit 30 and the 3D image generation unit 27 will be described. However, in a case where the respective functions of the output image selection unit 30 and the 3D image generation unit 27 are executed by separate information processing devices 70, Fig. 8 can be considered as processing executed by a plurality of information processing devices 70.

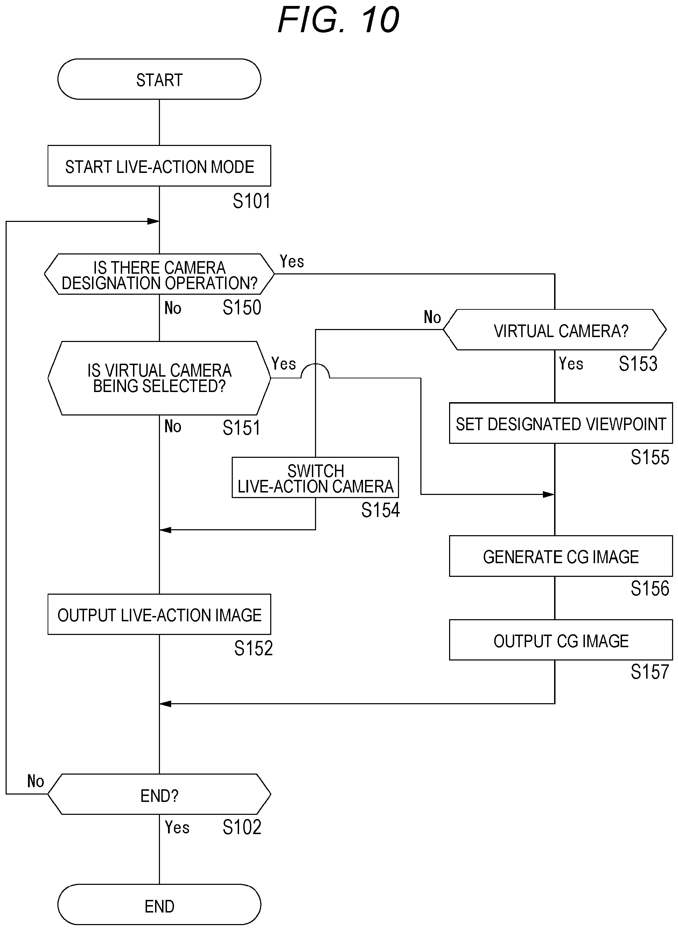

The same applies to Figs. 10, 12, 13, 15, and 17 to be described later.

Furthermore, it is assumed that, during a period when the output image selection unit 30 performs processing below, the EPTS data generation unit 22 continuously performs EPTS data generation, and the 3D image generation unit 27 can perform CG image generation using the EPTS data.

Furthermore, the output image selection unit 30 can instruct the 3D image generation unit 27 on the viewpoint position and the like of the CG image 51 to be generated.

Furthermore, the output image selection unit 30 can detect a user operation on the display unit 31, or can receive user's operation information in a case where the output image selection unit 30 is provided in a device separate from the terminal device 5.

Furthermore, in Fig. 8, "c1", "c2", and "c3" indicate processing connections.

As the processing of Fig. 8, first, the image processing unit 85 starts image output in the live-action mode in step S101. That is, processing of supplying the moving image as the live-action image 50 to the display unit 31 is started.

During the period when the image is output, the image processing unit 85 performs monitoring processing in step S102 to step S108.

In Step S102, the image processing unit 85 determines the end of the processing. For example, when the end of the game is set as the end timing of the processing, the image processing unit 85 determines the end of the game automatically or according to an operator input and the like. In a case where it is determined to end through some detection, the image processing unit 85 ends the processing of Fig. 8.

When the user's operation is not detected in the live-action mode (No in steps S103 to S105), the image processing unit 85 proceeds from step S106 to step S130 and outputs the live-action image 50. Thus, during the period of the live-action mode, a state in which the live-action image 50 is displayed on the display unit 31 continues.

When the operation is not detected in the CG camera mode (No in steps S103 to S106), the image processing unit 85 proceeds from step S107 to step S115, generates the CG image 51, and outputs the CG image 51 in step S116. Thus, during the period of the CG camera mode, a state in which the CG image 51 is displayed on the display unit 31 continues.

When the operation is not detected in the CG player viewpoint mode (No in steps S103 to S107), the image processing unit 85 proceeds from step S108 to step S122, generates the CG image 51 from the designated player viewpoint, and outputs the CG image 51A in step S123. Thus, during the period of the CG player viewpoint mode, a state in which the CG image 51A of the player viewpoint is displayed on the display unit 31 continues.

In step S103, the image processing unit 85 determines whether or not the user performs a tap operation on the screen of the display unit 31.

In a case where the tap operation is detected, the image processing unit 85 branches the processing depending on whether or not the current display mode (camera mode) is the live-action mode in step S110.

When the current display mode is the live-action mode, the image processing unit 85 proceeds to step S113 and transitions to the CG camera mode. Then, in step S114, the viewpoint is set to the viewpoint of the imaging device 10 that has captured the immediately preceding live-action image. For example, the same viewpoint position as the viewpoint position of the imaging device 10 that has captured the live-action image 50 displayed and output immediately before is set as the viewpoint position of the CG image.

In Step S115, the image processing unit 85 generates the CG image 51 on the basis of the set viewpoint position. In Step S116, the image processing unit 85 outputs the generated CG image 51. Thus, the live-action image 50 is switched, and the CG image 51 is displayed on the display unit 31. The CG image 51 in this case is an image at substantially the same viewpoint position as that of the immediately preceding live-action image 50.

In a case where the tap operation is detected in the CG camera mode or the CG player viewpoint mode, the image processing unit 85 proceeds from step S110 to step Sill and transitions to the live-action mode. Then, in step S112, the imaging device 10 is selected, and the processing proceeds to step S130.

The selection of the imaging device 10 in step S112 is processing of selecting the imaging device 10 of the viewpoint closest to the viewpoint of the immediately preceding CG image 51 (or 51A) among a plurality of the imaging devices 10. In this manner, the imaging device 10 is selected, and the live-action image 50 captured by the selected imaging device 10 is output in step S130.

Therefore, the image on the display unit 31 is switched to the live-action image 50 of a viewpoint close to the viewpoint position of the immediately preceding CG image 51.

In step S104, the image processing unit 85 determines whether or not the user performs a drag operation on the screen of the display unit 31.

In a case where the drag operation is detected, the image processing unit 85 determines whether or not the current mode is the CG camera mode in step S112. When the current mode is not the CG camera mode, the processing corresponding to the drag operation is not particularly performed. When the current mode is the CG camera mode, the processing proceeds to step S118.

In step S118, the viewpoint position is updated according to the operation direction and the operation amount of the drag operation by the user.

Then, the processing proceeds to step S115, the CG image 51 at the updated viewpoint position is generated, and the CG image 51 is output to the display unit 31 in step S116.

Since the above-described processing is performed in each frame during the drag operation, the viewpoint of the CG image 51 displayed on the display unit 31 changes according to the operation direction and the operation amount of the drag operation.

Note that, when the drag operation ends, the processing proceeds to steps S106, S130, and S115, and thus the CG image 51 at the viewpoint at the time point when the drag operation ends continues thereafter.

Furthermore, although not illustrated in this flowchart, even in the case of the CG player viewpoint mode, the CG image 51A of which the viewpoint is changed in accordance with the drag operation may be displayed.

In step S105, the image processing unit 85 determines whether or not the user performs a double-tap operation of the player on the screen of the display unit 31.

In a case where the double-tap operation is detected, the image processing unit 85 determines whether or not the current mode is the live-action mode or the CG camera mode in step S120. In the case of the CG player viewpoint mode already, the processing corresponding to the double-tap operation is not particularly performed.

When the current mode is the live-action mode or the CG camera mode, the image processing unit 85 proceeds to step S121 and transitions to the CG player viewpoint mode.

Then, in step S122, the image processing unit 85 generates the CG image 51A at a viewpoint position that is the designated player viewpoint, and in step S123, outputs the CG image 51A to the display unit 31.

Therefore, when the user performs the double-tap operation, the image on the display unit 31 is switched to the image of the designated player viewpoint.

When the image processing unit 85 performs the processing in Fig. 8 described above, image switching in response to the manual operation described with reference to Figs. 4 to 7 is implemented.

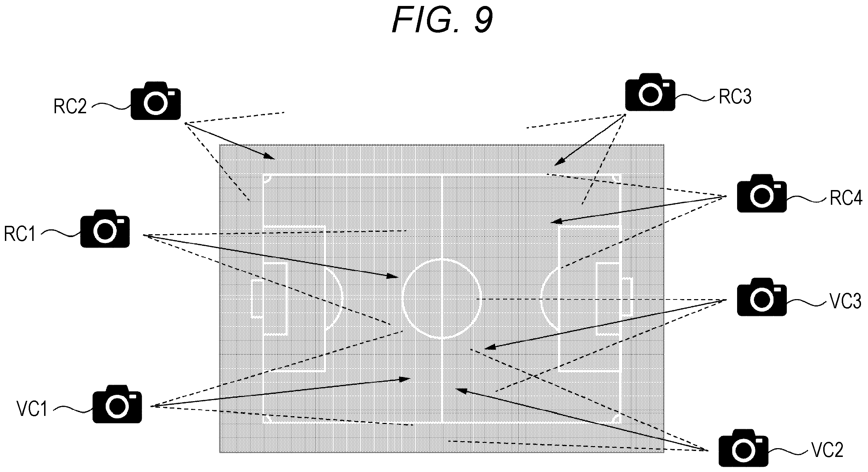

Another example of switching by manual operation will be described with reference to Figs. 9 and 10.

Fig. 9 illustrates a state in which the actual imaging devices 10 are disposed as real cameras RC1, RC2, RC3, and RC4 in a soccer court.

On the other hand, virtual cameras VC1, VC2, and VC3 indicate virtual camera viewpoints at places where the imaging devices 10 are not actually disposed.

In Fig. 9, the imaging direction and the range of the field of view of each of the real cameras RC1, RC2, RC3, and RC4 and each of the virtual cameras VC1, VC2, and VC3 are indicated by arrows and the ranges of broken lines.

For example, even in a case where only four imaging devices 10 as the real cameras RC1, RC2, RC3, and RC4 can be disposed, images of the virtual cameras VC1, VC2, and VC3 can be displayed on the terminal device 5.

The 3D image generation unit 27 can generate the images of the virtual cameras VC1, VC2, and VC3 as virtual images from respective viewpoint positions. That is, the 3D image generation unit 27 can generate the CG image 51 according to the situation of the game on the basis of the EPTS data and each viewpoint position.

Therefore, for example, the storage 28 stores the live-action images 50 of four viewpoint positions from the real cameras RC1, RC2, RC3, and RC4, and the CG image 51 (or it may be the CG images 51 of three systems of all viewpoints) of the viewpoint of any one of the virtual cameras VC1, VC2, and VC3, generated by the 3D image generation unit 27, and the output image selection unit 30 can select and output these images to the display unit 31.

Then, the image as illustrated in Fig. 9 is presented to the user as a UI image, and the user can designate an arbitrary camera on the UI image.

In this case, the image processing unit 85 of the information processing device 70 that functions as the output image selection unit 30 performs processing of Fig. 10.

Note that, hereinafter, the same processing as the processing described above is denoted by the same step number, and duplicated description is avoided.

In step S101 of Fig. 10, the image processing unit 85 starts processing in the live-action mode.

Until it is determined in step S102 that the processing ends, the image processing unit 85 confirms whether or not there is a camera designation operation in step S150.

Furthermore, in step S151, the image processing unit 85 confirms whether or not any one of the virtual cameras VC1, VC2, and VC3 is being currently selected.

During a period when any one of the real cameras RC1, RC2, RC3, and RC4 is being selected (No in step S151 in Fig. 10) and there is no designation operation, the image processing unit 85 outputs the live-action image in step S152.

Therefore, at the time of starting the processing, for example, the live-action image 50 of the real camera RC1 that is, for example, initially selected is output to the display unit 31.

When the camera designation operation by the user is detected at a certain time point, the image processing unit 85 proceeds from step S150 to step S153, and branches the processing depending on whether the virtual camera is designated or the real camera is designated.

In a case where a real camera different from the currently selected real camera is designated, the image processing unit 85 proceeds to step S154, switches the imaging device 10 to be selected according to the designation, and proceeds to step S152. For example, from a state in which the real camera RC1 is selected so far, the real camera RC3 is selected in accordance with the designation operation of the real camera RC3, and the live-action image 50 from the imaging device 10 corresponding to the real camera RC3 is displayed on the display unit 31.

In a case where it is detected that the operation of designating the virtual camera is performed by the user, the image processing unit 85 proceeds from step S153 to step S155, and sets the viewpoint position according to the designated virtual camera. Then, in step S156, the image processing unit 85 generates the CG image 51 in a state viewed from the set viewpoint position using the EPTS data, and outputs the CG image 51 to the display unit 31 in step S157.

Thus, for example, when the user designates the virtual camera VC1, the CG image 51 from the viewpoint of the virtual camera VC1 is displayed on the display unit 31.

Since the image processing unit 85 proceeds from step S151 to steps S156 and S157 during a period when a certain virtual camera is selected, the display unit 31 continues to display the CG image 51 from the viewpoint of the selected virtual camera.

In a case where the user performs an operation of designating another virtual camera, the setting of the viewpoint position is changed again in step S155, and then steps S156 and S157 are performed. Therefore, in the display of the display unit 31, the image is switched to the CG image 51 having a different viewpoint position.

Furthermore, in a case where the user performs an operation of designating a real camera when the CG image 51 is displayed, the image processing unit 85 selects the imaging device 10 according to the real camera designated in step S154, and outputs the live-action image 50 captured by the imaging device 10 to the display unit 31 in step S152. Therefore, in the display of the display unit 31, the image is switched from the CG image 51 to the live-action image 50 of the designated viewpoint.

With the above-described processing, it is possible to arbitrarily perform switching between the live-action image from the imaging device 10 and the CG image 51 from the viewpoint position where the imaging device 10 is not disposed in response to the user's operation.

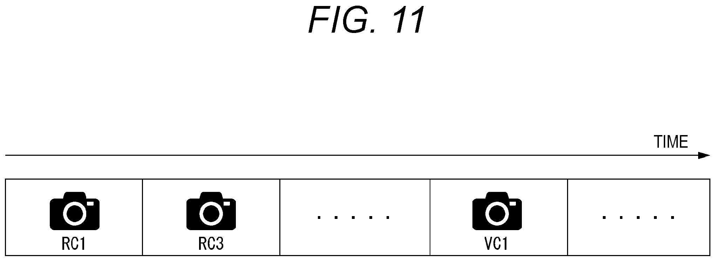

Next, Fig. 11 illustrates an example in which the real cameras RC1, RC2, RC3, and RC4 and the virtual cameras VC1, VC2, and VC3 are set on a time axis.

By setting the real camera RC1, the real camera RC3, ..., the virtual camera VC1, ..., and the like along the time axis as illustrated in Fig. 11, it is also possible to switch viewpoints of the live-action image 50 and the CG image 51 according to the progress of time.

### <4. Automatic image switching example>

Next, an example in which the live-action image 50 and the CG image 51 are switched by automatic processing will be described.

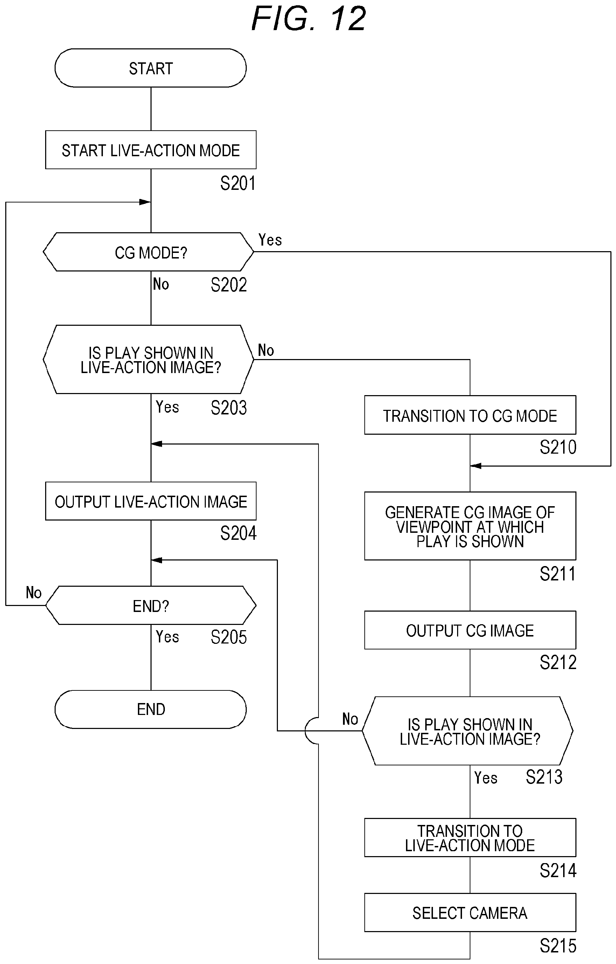

Fig. 12 illustrates a processing example in a case where the image processing unit 85 automatically performs switching.

Note that, in the following, an example in which the live-action mode and a CG mode are automatically switched will be described. The CG mode includes the CG camera mode and the CG player viewpoint mode, which are described above, and is a mode in which the CG image 51 is displayed.

In step S201, the image processing unit 85 starts processing in the live-action mode.

During the period of the live-action mode or the CG mode, the image processing unit 85 determines the end of the processing in step S205. For example, when the end of the game is set as the end timing of the processing, the image processing unit 85 determines the end of the game automatically or according to an operator input and the like. In a case where it is determined to end through some detection, the image processing unit 85 ends the processing of Fig. 12.

In step S202, the image processing unit 85 branches the processing depending on whether the current display mode is the live-action mode or the CG mode. In the case of the CG mode, in step S203, the image processing unit 85 determines whether or not the main scene to be displayed is shown in the live-action image 50 of the currently selected imaging device 10, that is, whether or not the main play of the subject is shown. For example, when the position of a ball or a player (that is, a player who is within a predetermined distance from the ball and moves in a direction approaching the ball) involved with the ball is to be displayed, it is determined whether or not the ball is shown in the live-action image 50.

In a case where the play is shown in the live-action image 50 of the currently selected imaging device 10, the image processing unit 85 proceeds to step S204, outputs the live-action image 50, and displays the live-action image 50 on the display unit 31. Therefore, the main play is displayed with the live-action image 50.

Note that since there is a case where the ball is not shown temporarily due to the posture of the player or the like, whether or not the play is shown is preferably determined not only for the ball but also for the player. For example, it may be determined whether or not the ball as a main subject is shown, it may be determined whether or not the player designated in advance is shown, or it may be determined whether or not both the ball and the player are shown. Furthermore, it may be determined whether or not the player holding the ball is shown, and in a case where the player holding the ball is shown, it may be determined that the main play is shown. As a method of determining the player holding the ball, it is possible to detect the player within a predetermined distance from the ball and/or the player touching the ball last (a player kicking the ball last) and determine the detected player as the player holding the ball. Furthermore, it may be determined whether or not an area in which the players are most gathered (a range in which the density of a plurality of the players in the court is equal to or greater than a predetermined value) is shown, and in a case where the area in which the players are most gathered is shown, it may be determined that the main play is shown. Furthermore, the player closest to the gravity center position of the positions of a plurality of the players in the court may be detected, and in a case where the player closest to the gravity center position is shown, it may be determined that the main play is shown. Alternatively, it may be determined whether or not the play is shown by using an image for a certain period of time (for example, a frame from about two to about three seconds before the current frame).

Furthermore, a place to be displayed, that is, a place where the main play is performed changes from moment to moment depending on the movement of the ball or the player. Even when it is not shown in the current live-action image 50, it may be shown in the live-action image 50 by another imaging device 10. In such a case, the selected live-action image 50 may be switched and output to the display unit 31 in step S204.

In a case where it is determined in step S203 that the play is not shown in the live-action image 50, the image processing unit 85 proceeds to step S210 and transitions to the CG mode.

In step S211, the image processing unit 85 generates a CG image from a viewpoint at which the play is shown, for example, a viewpoint position at which a ball is shown, and outputs the CG image 51 to the display unit 31 in step S212.

Thus, when the scene of the play cannot be tracked in the live-action, the scene of the play is displayed by the CG image 51.

During a period when the CG image is output, in step S213, the image processing unit 85 determines whether or not the play is shown in the live-action image 50 of any one of the imaging devices 10.

During a period when the play is not shown in any one of the live-action images 50, the image processing unit 85 continues the CG mode. That is, since the processing of steps S202, S211, and S212 are repeated, the state in which the play is displayed by the CG image 51 is continued on the display unit 31.

In a case where it is determined in step S213 that the play is shown in the live-action image 50 of any one of the imaging devices 10, the image processing unit 85 ends the CG mode and transitions to the live-action mode in step S214, and performs camera selection in step S215 and proceeds to step S204.

The camera selection means that the imaging device 10 capturing the live-action image 50 showing the play in step S213 is selected. When there is a plurality of the imaging devices 10 showing the play, the imaging device 10 closest to the viewpoint position of the immediately preceding CG image 51 may be selected among a plurality of the imaging devices 10.

Then, in step S204, the image processing unit 85 outputs the live-action image 50 by the selected imaging device 10.

Therefore, in the display unit 31, the image is switched from the CG image 51 to the live-action image 50.

Through the above-described processing, the live-action image 50 and the CG image 51 are automatically switched and provided to the user. In the case of this processing example, basically, an image of the play is provided to the user as the live-action image 50, but during a period when the play is performed in an area that cannot be captured in the live-action, it is realized that the image of the play is provided with the CG image 51.

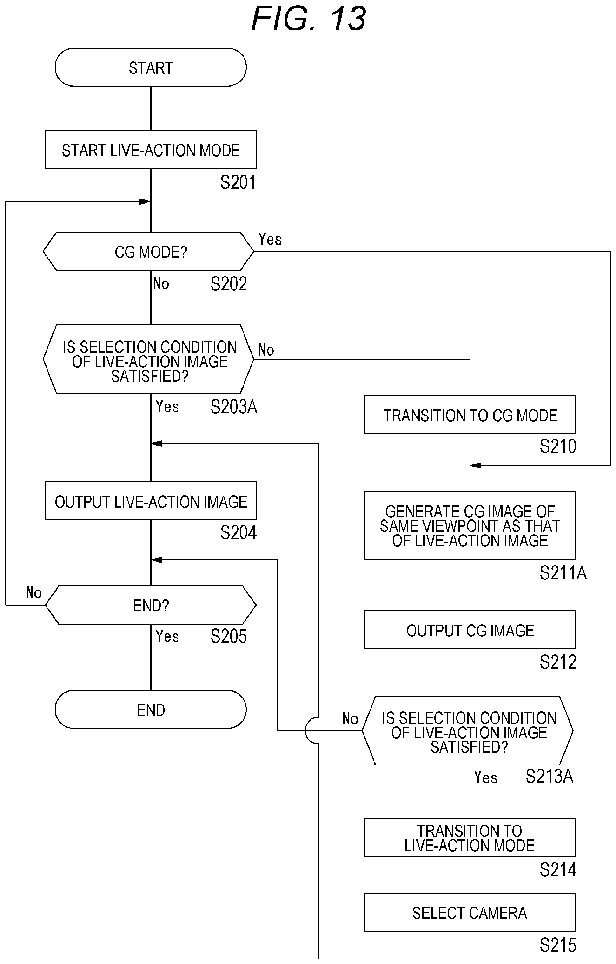

Fig. 13 illustrates another processing example in a case where the image processing unit 85 automatically performs switching.

Fig. 13 illustrates an example in which steps S203, S211, and S213 in Fig. 12 are changed to steps S203A, S211A, and S213A as illustrated in Fig. 13. Therefore, the changed point will be described below.

After starting the processing in the live-action mode, the image processing unit 85 confirms whether or not the selection condition of the live-action image is satisfied in step S203A.

As the selection condition, the following conditions are assumed.

### • Image quality condition

That is, the condition indicates whether the live-action image 50 is obtained with sufficient image quality. For example, when the resolution of the live-action image 50 becomes lower than necessary due to the zoom magnification, there is an example in which the selection condition is not satisfied.

### • Information amount condition

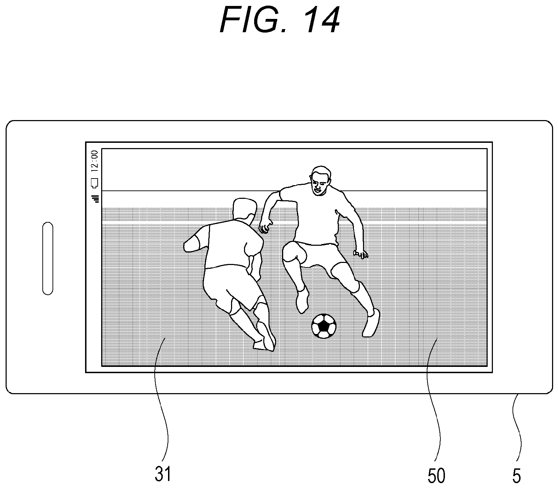

For example, in a case where it can be determined that the live-action image 50 is more desirable than the CG image 51 in terms of the information amount, there is an example in which the selection condition is satisfied. For example, as illustrated in Fig. 14, in a state in which the face and facial expression of the player are known, it can be considered that the live-action image 50 is more appropriate than the CG image 51 in terms of the information amount.

### • Additional image condition

In a case where an additional image, for example, the trajectory of the ball, the character, numerical value, graph, or the like related to the ability of the player or content of the play is displayed, whether to superimpose the additional image on the live-action image 50 or the CG image 51 is set in advance. For example, the additional image is set to be superimposed on the live-action image. According to this setting, the live-action image 50 is selected when the additional image is superimposed.

For example, the selection condition for the live-action image 50 as in the above-described example is determined, and in a case where the condition for selecting the live-action image 50 is satisfied, the image processing unit 85 proceeds to step S204, and outputs the live-action image 50 to the display unit 31 for display.

On the other hand, in a case where it is determined that the selection condition for the live-action image 50 is not satisfied, the image processing unit 85 proceeds to step S210 and transitions to the CG mode.

In step S211A, the image processing unit 85 generates a CG image after setting the same viewpoint position as that of the immediately preceding live-action image 50, and outputs the CG image 51 to the display unit 31 in step S212.

In step S213A, the image processing unit 85 performs selection condition determination for the live-action image 50 at that time point similarly to step S203A, and determines whether or not the selection condition for the live-action image 50 is satisfied. When the selection condition is not satisfied, the image processing unit 85 continues the CG mode.

Therefore, during a period when the live-action image 50 does not satisfy the selection condition, the processing in steps S211A and S212 are continued, and the state in which the play is displayed with the CG image 51 is continued on the display unit 31.

In a case where it is determined in step S213A that the selection condition for the live-action image 50 is satisfied, the image processing unit 85 ends the CG mode and transitions to the live-action mode in step S214, and performs camera selection in step S215. Then, in step S204, the image processing unit 85 outputs the live-action image 50 by the selected imaging device 10.

Therefore, in the display unit 31, the image is switched from the CG image 51 to the live-action image 50.

Through the above-described processing, the live-action image 50 and the CG image 51 are automatically switched and provided to the user. In the case of this processing example, basically, an image is provided to the user as the live-action image 50, but during a period when the selection condition for the live-action image 50 is not satisfied, it is realized that the image of the play is provided with the CG image 51.

Note that various other selection conditions can be considered. For example, as an operation condition, it is conceivable to perform switching to the CG image 51 when reproduction is temporarily stopped during reproduction with the live-action image 50.

Furthermore, there is also a selection condition depending on an imaging range of the imaging device 10. For example, it is conceivable that the live-action image 50 is selected when the captured live-action image 50 is within a predetermined range as the angle of view and imaging direction of the imaging device 10, and is switched to the CG image 51 in a case where the angle of view and the imaging direction are moved by a predetermined range or more.

Furthermore, the selection condition may be set as the quality of the CG image 51 or the like. For example, there is an example in which the live-action image 50 is selected when the quality of the CG image 51 cannot be maintained due to the quality of the 3D model, the state of the EPTS data, and the like.

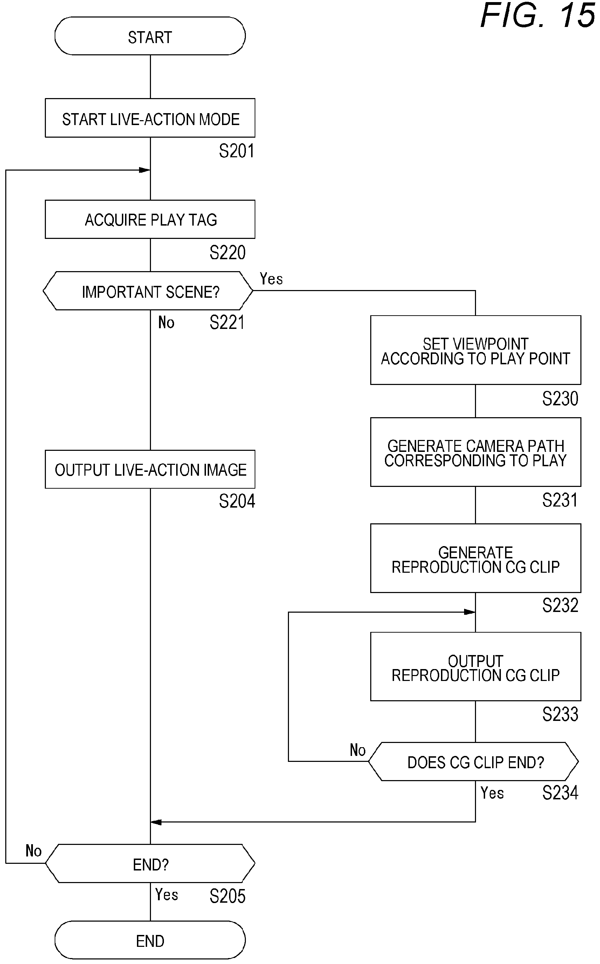

Next, with reference to Fig. 15, a processing example of performing switching to the replay using the CG image 51 in an important scene will be described.

After starting the processing in the live-action mode in step S201, the image processing unit 85 acquires a play tag in step S220. The play tag is, for example, a tag set by an operation of an operator or automatic processing based on image analysis for each scene, and is information indicating a time position of a scene during a game. For example, it is assumed that a shooting scene, a foul scene, a corner kick scene, and the like can be determined by the play tag.

In step S221, the image processing unit 85 determines whether or not the current image is an important scene with reference to the play tag.

When the scene is not a particularly important scene, the image processing unit 85 proceeds to step S204, and outputs the live-action image 50 to the display unit 31 to display.

This processing is continued until it is determined in step S205 that the processing ends.

In a case where it is determined to be an important scene in step S221, the image processing unit 85 proceeds to step S230, sets an appropriate viewpoint position at a play point, and sets a camera path corresponding to the play in step S231.

Since the important scene is, for example, the shooting scene, the foul scene, a set play scene such as a free kick, or the like, an appropriate viewpoint position is set according to the location of the scene.

Furthermore, the camera path is a movement trajectory of the camera viewpoint in the replay image, and an appropriate camera path is set according to the type of scene.

In step S232, the image processing unit 85 generates a reproduction CG clip reproducing the scene, and outputs the reproduction CG clip in step S233. For example, a clip of about several seconds, which reproduces an important scene with the CG image 51, is displayed on the display unit 31.

When the output of the reproduction CG clip ends, the image processing unit 85 returns from step S234 to the processing of the live-action mode. Therefore, subsequent to the reproduction CG clip, switching to the live-action image 50 is performed.

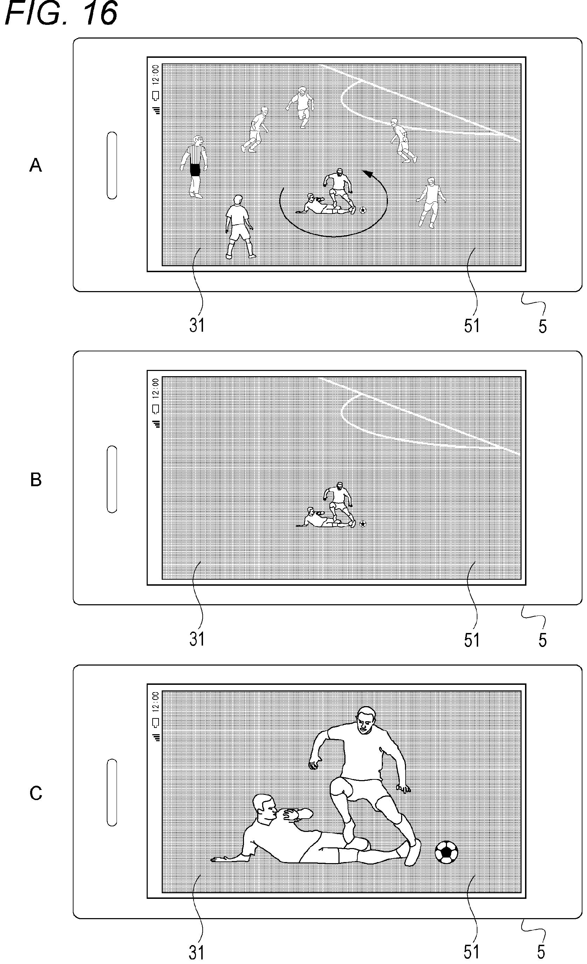

For example, Fig. 16A illustrates an example of a reproduction CG clip of the foul scene.

Immediately after the foul scene is displayed with the live-action image 50, a reproduction CG clip of the scene is created and displayed as the CG image 51. This allows the user to view the important scene again with the CG image 51.

Here, in a case where the important scene is viewed with the CG image 51, it is also possible to display only players related to the scene in the reproduction CG clip. That is, in the CG image 51 generated in step S232, an image displaying only some players related to the play is generated. Which player is displayed can be selected according to the position information based on the EPTS data.

For example, Fig. 16B is an example in which only players related to the scene are displayed in the scene of Fig. 16A.

When displaying only the player related to the scene, for example, in the foul scene, by displaying only the player related to the foul, it is possible to show the situation of the foul in an easy-to-understand manner. Furthermore, in the shooting scene, it is also possible to clearly show the technique of shooting.

In particular, in a case where it is difficult to see the important scene due to other players when viewed from the viewpoint position, it is preferable to display the CG image 51 for only related players.

Furthermore, as in the example of Fig. 16A, the trajectory of the movement of the player can be displayed, and the situation can be presented in an easy-to-understand manner.

Furthermore, as illustrated in Fig. 16C, only players related to the scene may be displayed and displayed in an enlarged manner.

The processing in Figs. 12, 13, and 15 can be a series of processing or processing executed in parallel in combination.

Furthermore, Figs. 12, 13, and 15 illustrate processing examples of automatically switching between the live-action image 50 and the CG image 51, but these processing can be combined with the manual operations of Figs. 8 and 10.

For example, in a case where the CG image 51 is displayed in the processing of Figs. 12, 13, and 15, the viewpoint position may be changed by the drag operation.

Furthermore, during the processing of Figs. 12, 13, and 15, the live-action image 50 and the CG image 51 may be switched by the tap operation, or the CG image 51A of the player viewpoint may be displayed by the double-tap operation.

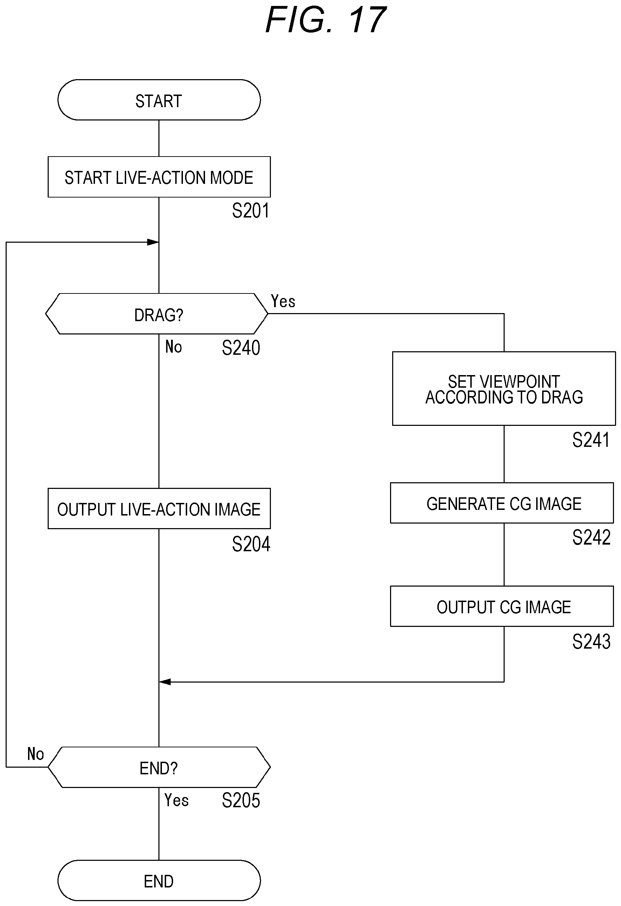

Fig. 17 illustrates still another example of the combination of the automatic processing and the manual operation. Basically, the live-action image 50 is output, but the CG image 51 is displayed only during a period when the user performs a drag operation, and the viewpoint position can be freely changed. Furthermore, when the drag operation ends, the processing automatically returns to the live-action image 50.

After starting the processing in the live-action mode in step S201, the image processing unit 85 outputs the live-action image 50 to the display unit 31 in step S204 while monitoring the drag operation in step S240.

In a case where the drag operation is detected, the image processing unit 85 sets the viewpoint position according to the operation amount and the operation direction in the drag operation in step S241, generates a CG image in step S242, and outputs the CG image to the display unit 31 in step S243.

During the drag operation, the processing of steps S241, S242, and S243 described above are repeated, and thus the CG image 51 is displayed while the viewpoint is moved according to the operation.

When the drag operation ends, the processing of the image processing unit 85 proceeds from step S240 to step S204, and thus the display on the display unit 31 returns to the live-action image 50.

Note that, when returning from the CG image 51 to the live-action image 50, the live-action image 50 preferably outputs the live-action image 50 by the imaging device 10 closest to the viewpoint position of the immediately preceding CG image 51. In this manner, it is possible to provide the user with the live-action image 50 near the viewpoint position changed according to the user's operation.

### <5. Image switching including live-action free viewpoint image>

Next, an example of using a free viewpoint image using a 3D model based on live-action will be described. That is, in addition to the live-action image 50 and the CG image 51, the live-action free viewpoint image can also be selected.

There is a technology for generating a free viewpoint image (Volumetric Capturing) corresponding to an observation image from an arbitrary viewpoint in a three-dimensional space on the basis of three-dimensional information representing a subject imaged from multiple viewpoints in the three-dimensional space. This is a technology for generating an image of a free viewpoint without a position restriction from multiple viewpoint images. The free viewpoint image is called "Free View", "Volumetric", or the like. The free viewpoint image is useful as, for example, a replay image of the sports broadcast.

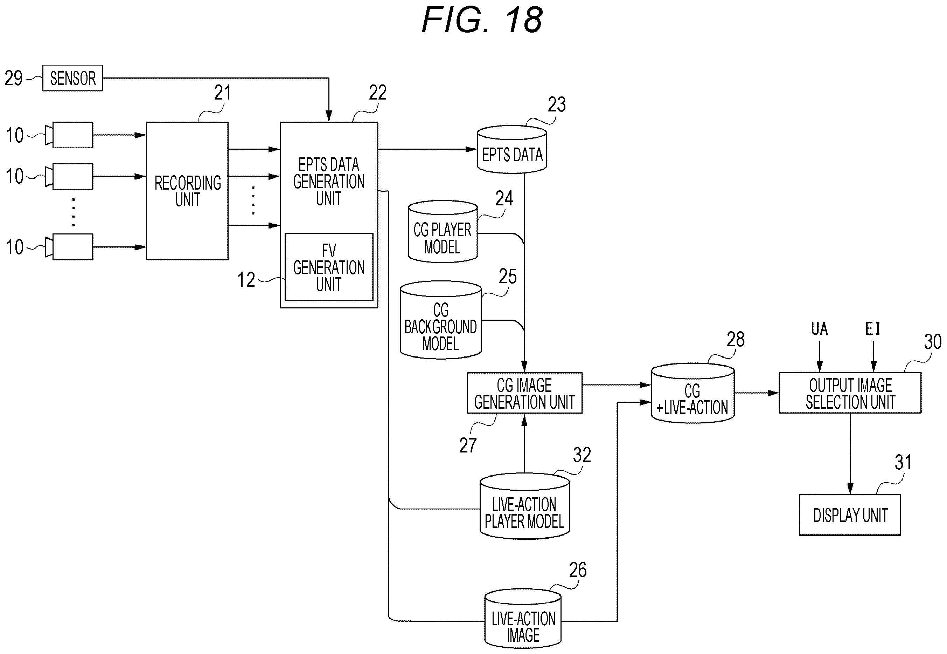

Fig. 18 is a system configuration example in which a function of generating a live-action free viewpoint image is added to the configuration of Fig. 2. That is, in addition to the configuration of Fig. 2, an FV generation unit 12 and a storage 32 are provided. Note that "FV" indicates "Free View", that is, the FV generation unit 12 performs rendering as free viewpoint image generation.

In this case, although the FV generation unit 12 has an internal function as the EPTS data generation unit 22, the present disclosure is not limited thereto, and the FV generation unit 12 may be realized by an independent device.

The FV generation unit 12 performs free viewpoint image generation using the image captured by the imaging device 10, which is supplied from the recording unit 21.

The FV generation unit 12 generates a 3D model of the subject from the captured image of the multiple viewpoints obtained by each imaging device 10. An image of an arbitrary viewpoint for the subject is generated using the 3D model.

For example, the FV generation unit 12 generates a free viewpoint image that changes the viewpoint position, for example, according to a camera path designated by an operator's operation or automatic control.

The free viewpoint image can also be generated as the CG image 51, but the free viewpoint image generated by the FV generation unit 12 is different from the CG image 51 in that, for example, a 3D model (live-action player model) of each player is generated on the basis of the live-action of each player, and the free viewpoint image is generated using the live-action player model. The free viewpoint image using the live-action player model will be referred to as a "live-action FV image" for distinction in description.

Note that it is also possible to store the live-action player model in the storage 32 as illustrated in Fig. 18 so that the 3D image generation unit 27 can generate a CG image by using the live-action player model.

Furthermore, when the FV generation unit 12 performs FV rendering, since the position, posture, and the like of a player or the like at each time point can be more accurately recognized by referring to the EPTS data, a free viewpoint image with higher accuracy can be generated.

As described above, in a case of a system in which the live-action FV image can be selected, it is conceivable to select the live-action FV image instead of the CG image 51 in switching between the live-action image 50 and the CG image 51.

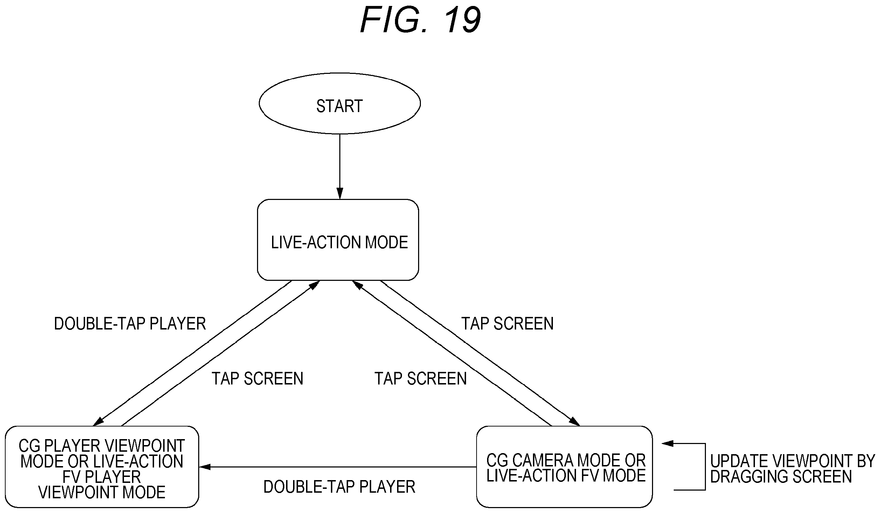

Fig. 19 illustrates the mode transition similarly to Fig. 7.

For example, in an initial state of display start, the output image selection unit 30 is set to a live-action mode, and the live-action image 50 is displayed on the display unit 31.

When the tap operation on the screen is detected in the live-action mode, the output image selection unit 30 transitions to the CG camera mode or the live-action FV mode, and the CG image 51 or the live-action FV image is displayed on the display unit 31.

When the drag operation is detected in the CG camera mode or the live-action FV mode, the output image selection unit 30 changes the viewpoint position of the CG image 51 or live-action FV image in response to the operation.

When the double-tap operation at a position of the player on the screen is detected in the live-action mode, the CG camera mode, or the live-action FV mode, the output image selection unit 30 transitions to a CG player viewpoint mode or a live-action FV player viewpoint mode, and the CG image 51A of the player viewpoint or the live-action FV image is displayed on the display unit 31.

When the tap operation on the screen is detected in the CG camera mode, the live-action FV mode, the CG player viewpoint mode, or the live-action FV player viewpoint mode, the output image selection unit 30 transitions to the live-action mode, and the live-action image 50 is displayed on the display unit 31.

In this manner, it is conceivable to selectively use the CG image 51 and the live-action FV image in the CG camera mode or the live-action FV mode, and to selectively use the CG image 51 and the live-action FV image in the CG player viewpoint mode and the live-action FV player viewpoint mode.

It is considered which one is selected is determined by the quality of the live-action FV image or the like. The quality of the live-action FV image corresponds to the quality of the 3D model (live-action player model) generated on the basis of the live-action image. Thus, the determination may be made from the viewpoint of whether or not the live-action player model is accurately generated.

For example, since the live-action player model is generated according to the live-action image, first, the live-action FV image cannot be generated unless the live-action player model can be generated. Such a period is displayed using the CG image 51 in the CG camera mode or the live-action FV mode.

Then, after the start of imaging, the following conditions are determined for generation of the live-action player model.
- The number of captured images without occlusion is equal to or greater than a predetermined number.
- The posture of the player is appropriate.
- A captured image in a state of not moving violently is obtained.

The occlusion is a state in which an object in front hides an object behind. In this case, a state in which another player is present around a target player for generating the live-action player model and is hidden from the viewpoint of the captured image is referred to as occlusion.

As the captured image of each viewpoint by a plurality of the imaging devices 10 at a certain timing, a fact that there are a predetermined number or more of images captured in a state in which the target player is not occluded is one of the conditions for generating a high-accuracy live-action player model of the player.

The condition that the posture of the player is appropriate is a condition that a posture suitable for 3D modeling such as a so-called T pose or A pose, or a posture close thereto is desirable. A fact that the target player for generating the live-action player model is in a pose suitable for 3D modeling also may be one of the conditions for generating a high-accuracy live-action player model.

This is because there is a high possibility that motion blur occurs in the captured image at the time of violent movement, and the captured image is not suitable for generating a high-accuracy live-action player model. Therefore, one of the conditions may be that a captured image in a state of not moving violently is obtained.

For example, in a case where the live-action player model can be generated with high accuracy by performing the determination under the above-described conditions, the live-action player model for the player is generated.

For the player for which the live-action player model can be generated in this way, it is conceivable to select the live-action FV image when the free viewpoint image is generated.

On the premise that the live-action player model can be generated, the CG image 51 and the live-action FV image may be selected according to the following determination.

For example, in a case where the CG player model used by the 3D image generation unit 27 is greatly different from a real player's body shape and characteristics, the live-action FV image is more suitable.

Furthermore, also in a case where it is desired to display an image based on more real information from the viewpoint of the CG image, the live-action FV image is more suitable.

These points may be determined to select the CG image 51 and the live-action FV image.

The above description is merely an example, and the live-action image 50, the CG image 51, and the live-action FV image may be arbitrarily switched by the user operation, or these three images may be automatically switched through a predetermined condition determination or the like.

### <6. Output of live-action image and CG image>

Although the processing of selectively displaying the live-action image 50 and the CG image 51 on the display unit 31 has been mainly described above, both the live-action image 50 and the CG image 51 may be displayed at the same time as one of the switching modes.

For example, the display of only the live-action image 50 and the display of the live-action image 50 and the CG image 51 are switched.

Alternatively, the display of only the CG image 51 and the display of the live-action image 50 and the CG image 51 are switched.

Alternatively, the display of only the live-action image 50, the display of only the CG image 51, and the display of the live-action image 50 and the CG image 51 are switched.

Examples of the display of the live-action image 50 and the CG image 51 are provided as below.
- The play of the player is displayed with the live-action image 50, and the play of an example player is displayed with the CG image 51.
- The image of the player in the live-action image 50 and the image of a virtual player of the coach control in the CG image 51 are displayed at the same time.
- The movements of a specific player in the live-action image 50 temporally before and after are synthesized with the CG image 51.
- The player image in the CG image is synthesized only at a portion invisible in the live-action image 50.
- The image of the player in the live-action image 50 and the CG image 51 of the player viewpoint are displayed at the same time.
- The depth information obtained from the CG image 51 is used for the live-action image 50, and thus meta information such as player information and a trajectory is superimposed and displayed.
- Two timelines are provided for the live-action image 50 and the CG image 51, and arbitrary time points are displayed.

### <7. Conclusion and modification example>

According to the above-described embodiments, the following effects can be obtained.

The information processing device 70 according to the embodiment includes the image processing unit 85 that performs processing of outputting, in response to a trigger, the CG image 51 generated on the basis of the EPTS data (estimation information regarding the subject) generated on the basis of the captured image and a three-dimensional model of the subject in a case where the live-action image 50 captured by the imaging device 10 is output.

For example, when the live-action image 50 is output for display output, the CG image 51 is output in response to a trigger based on the manual operation or the automatic determination. For example, the live-action image 50 can be switched to the CG image 51, or the CG image 51 can be output in addition to the live-action image 50.

Thus, for example, a state of viewing the live-action image 50 and a state of viewing the CG image 51 in a soccer game or the like can be selectively or compositely provided to the user. Therefore, the user can view the game scene with the live-action image 50 and various game scenes with the CG images 51.

Note that, in the embodiment, the live-action image 50 is initially displayed, and switching to the CG image 51 is performed by a trigger through the operation or the automatic processing, but this is an example. The CG image 51 may be initially selected and switched to the live-action image 50 by the trigger.

In the embodiment, the CG image 51 includes an image of a viewpoint different from the viewpoint of the imaging device 10 capturing the live-action image 50. That is, an image of a viewpoint, which cannot be obtained from the live-action image 50, can also be generated as the CG image 51.

Thus, the user can view the game scene with the actually captured live-action image and the game scene with the CG image from the viewpoint that cannot be captured in the live-action.

In the embodiment, an example has been described in which the image processing unit 85 selectively performs the processing of outputting the live-action image 50 and the processing of outputting the CG image 51.

For example, in a state in which the live-action image 50 is output, the processing is switched to processing of outputting the CG image 51 in response to the trigger. Thus, the game scene with the live-action image 50 and the game scene with the CG image 51 can be selectively provided to the user.

In the embodiment, an example has been described in which the image processing unit 85 performs processing of automatically determining a trigger on the basis of input information and outputting the CG image 51 (see Figs. 12, 13, and 15).

In a state in which the live-action image 50 is output, the trigger is automatically determined, and the processing is switched to processing of outputting the CG image 51. Thus, the CG image 51 can be automatically provided to the user in an appropriate scene.

Note that, after the transition to the CG image 51, the image can automatically transition to the live-action image 50 through predetermined determination processing. In the processing of Figs. 12, 13, 15, and 17, the processing automatically returns to the live-action image.

On the other hand, it is also conceivable to automatically transition to the CG image, and then return to the live-action image according to the user's operation.

In the embodiment, an example has been described in which, in a case where a predetermined scene is not shown in the live-action image 50, the image processing unit 85 performs processing of determining occurrence of the trigger and outputting the CG image 51.

In a case where the main play scene, for example, the position of the ball or the position of the player who controls the ball cannot be tracked in the live-action image 50 in a state in which the live-action image 50 is output, that is, in a case where the ball or the play involved with the ball is not shown in the live-action image 50, it is determined that the trigger has occurred and the processing of outputting the CG image 51 is performed (see Fig. 12). Thus, when a scene that cannot be tracked in the live-action image 50 is generated, the CG image 51 in the scene can be automatically provided.

In the embodiment, an example has been described in which the image processing unit 85 performs processing of determining the occurrence of the trigger according to the important scene determination result and outputting the CG image 51 as a playback image.

In a state in which the live-action image is output, for example, an important scene such as a scoring scene, a shooting scene, a foul scene, a penalty kick scene, or a corner kick scene is determined, and when the important scene is determined, the processing of outputting the CG image is performed (see Fig. 15). In particular, in this case, the CG image as the playback image in the important scene is generated and output. This allows the user to view the important scene again with the CG image. In particular, since the image is the CG image, the important scene can be viewed by using images from various viewpoint directions.

In the embodiment, an example has been described in which the image processing unit 85 performs processing of determining the occurrence of the trigger as the determination result of the selection condition for the live-action image 50 or the CG image 51, and outputting the CG image 51 according to the determination for the occurrence of the trigger.

For example, various selection conditions such as the quality of the live-action image 50 according to the zoom state, the quality of the CG image 51 as to whether or not it is close to live-action, the presence or absence of superimposition of an additional image, and the information amount in the image such as the facial expression of the player in the live-action image 50 are assumed. When the live-action image 50 is displayed, the trigger determination is performed according to these selection conditions, and processing of outputting the CG image 51 is performed (see Fig. 13). Thus, in a case where it is determined that the CG image 51 is more appropriate than the live-action image 50, the CG image 51 can be automatically provided.

In the embodiment, an example has been described in which, in a case where the main subject to be displayed in the live-action image 50 is not shown in the live-action image 50, the image processing unit 85 performs processing of determining the occurrence of the trigger and outputting the CG image 51 (see Fig. 12).

By performing the processing of outputting the CG image 51 in a situation in which a main subject to be displayed with the live-action image 50, for example, the ball or the player who controls the ball cannot be displayed in a state in which the live-action image 50 is output, it is possible to provide the CG image 51 that presents behavior of the main subject that cannot be shown in the live-action image 50.

In the embodiment, an example has been described in which the image processing unit 85 performs processing of determining that a predetermined operation input is the occurrence of the trigger and outputting the CG image 51 (see Figs. 4 to 11).

In a state in which the live-action image 50 is output, the processing is switched to processing of outputting the CG image 51 in response to the user's operation. Thus, the user can arbitrarily switch the live-action image 50 to the CG image 51 and view the CG image 51.

Furthermore, in the embodiment, an example has been described in which the image processing unit 85 performs processing of determining that a predetermined operation input is the occurrence of a trigger, setting the viewpoint position on the basis of the viewpoint position of the live-action image 50, and outputting the CG image 51 (See Figs. 4 and 8). For example, when the processing is switched to processing of outputting the CG image 51 in response to the user's operation in a state in which the live-action image 50 is output, the viewpoint position of the CG image 51 is set to be similar to the viewpoint position of the immediately preceding live-action image 50. Thus, it is possible to transition to the CG image 51 without causing the user to feel unnaturalness caused by the image switching.

Note that, in addition to setting the viewpoint position of the CG image to be similar to the viewpoint position of the immediately preceding live-action image 50, it is also conceivable to set the viewpoint position of the CG image to be different from the viewpoint position of the immediately preceding live-action image 50 by a predetermined amount, or intentionally perform processing of setting the viewpoint position in an opposite direction.

In the embodiment, an example has been described in which the image processing unit 85 performs processing of outputting the CG image 51 with a changed viewpoint in response to the operation input in a case where the CG image 51 is output.

In a state in which the CG image 51 is output, for example, the viewpoint of the CG image 51 is changed by a predetermined operation such as a drag operation by the user (see Figs. 5 and 8). This allows the user to arbitrarily view images from various viewpoints.

In the embodiment, an example has been described in which the image processing unit 85 performs processing of outputting the CG image 51 from the viewpoint of the specific subject according to the designation operation of the specific subject in a case where the live-action image 50 or the CG image 51 is output.

In a state in which the live-action image 50 and the CG image 51 are output, the user performs an operation to designate a player by, for example, a double tap, so that the CG image from the viewpoint of the player is output (see Figs. 6 and 8). Thus, it is possible to confirm an image from the viewpoint of an individual player.

In the embodiment, an example has been described in which the image processing unit 85 performs processing of outputting the CG image 51 while a predetermined operation input continues (see Fig. 17).

For example, when the drag operation is performed, the CG image 51 is output, but the CG image 51 is output only while the drag operation is continued. When the drag operation ends, the processing returns to the output of the live-action image 50. With such processing, for example, it is possible to provide an interface in which display accompanied by viewpoint update is performed with the CG image 51 only when the user wants to change the viewpoint by drag operation, and the processing returns to the live-action image 50 after the operation ends. The user can easily view an image of a viewpoint different from the live-action when the user wants to view the image.

Note that processing of outputting the live-action image 50 may be performed while a predetermined operation is continued and the CG image 51 is output. This is useful, for example, in a case where the user wants to temporarily confirm the live-action image 50 when the user is viewing the CG image 51.

In the embodiment, an example has been described in which the image processing unit 85 performs processing of displaying only a subject person related to a scene in the CG image 51.

For example, in step S115 of Fig. 13, step S156 of Fig. 10, step S211 of Fig. 12, step S211A of Fig. 13, step S232 of Fig. 15, step S242 of Fig. 17, and the like, the CG image 51 can include only players involved in the play. In this manner, it is possible to obtain an image in which the movement of each player in the play is easy to understand.

In the embodiment, an example has been described in which the image processing unit 85 selectively performs the processing of outputting the live-action image 50, the processing of outputting the CG image 51, and the processing of outputting the live-action FV image (see Figs. 18 and 19).

For example, when the live-action image 50 can be switched to the CG image 51 to be output, the live-action FV image can be used instead of the CG image 51. For example, it is conceivable to select any one of the CG image and the live-action FV image according to the quality of the CG image and the quality of the live-action FV image. Thus, a higher-quality virtual image can be provided to the user.

In the embodiment, a case where the image processing unit 85 performs the processing of outputting both the live-action image 50 and the CG image 51 has also been described.

For example, switching is performed between a state in which the live-action image is output and processing of outputting the CG image in addition to the live-action image according to the trigger. Alternatively, only the live-action image, only the CG image, and both the live-action image and the CG image can be switched. Thus, various types of information can be presented in a state in which the live-action image 50 and the CG image 51 can be compared with each other.

In the embodiment, a case where the image processing unit 85 has a function as the 3D image generation unit 27, and performs the processing of generating the CG image 51 on the basis of the EPTS data generated on the basis of the captured image and the three-dimensional model of the subject has been described.

By using the function of the 3D image generation unit 27, images of various viewpoints can be generated.

It has been described that the image processing unit 85 according to the embodiment also performs the processing of generating the EPTS data on the basis of the captured image.

For example, the EPTS data generation unit 22 corresponding to the estimation information generation unit 2 generates EPTS data from the captured image. By using this EPTS data, it is possible to generate a CG image for reproducing an actual game.

The image processing unit 85 according to the embodiment outputs the live-action image 50 and the CG image 51, but may display and output the live-action image 50 and the CG image 51 not only as a 2D image but also a 3D image.

Furthermore, a display device as the output destination may be integrated with the information processing device 70, physically connected by wiring or the like, or communicable by a wired or wireless network.

The program according to the embodiment is a program for causing, for example, a CPU, a DSP, an AI processor, or the like, or an information processing device including the CPU, the DSP, the AI processor, or the like, to execute the processing illustrated in Figs. 8, 10, 12, 13, 15, and 17.

That is, the program according to the embodiment is a program causing the information processing device 70 to execute processing of outputting, in response to the trigger, the virtual image (CG image 51) generated on the basis of estimation information regarding the subject generated on the basis of at least one of the captured image or the sensor information and the three-dimensional model of the subject in a case where the live-action image 50 captured by the imaging device 10 is output.

With such a program, the information processing device 70 constituting the image processing system 1 according to the embodiment can be implemented in, for example, a computer device, a mobile terminal device, or another device capable of executing another information processing.

Such a program can be recorded in advance in an HDD as a recording medium built in the device such as the computer device, a ROM in a microcomputer having a CPU, or the like.

Alternatively, the program can be temporarily or permanently stored (recorded) in a removable recording medium such as a flexible disk, a compact disc read only memory (CD-ROM), a magneto optical (MO) disk, a digital versatile disc (DVD), a Blu-ray Disc (registered trademark), a magnetic disk, a semiconductor memory, or a memory card. Such a removable recording medium can be provided as so-called package software.

Furthermore, such a program may be installed from the removable recording medium into a personal computer or the like, or may be downloaded from a download site via a network such as a local area network (LAN) or the Internet.

Furthermore, such a program is suitable for providing the information processing device 70 constituting the image processing system 1 according to the embodiment in a wide range. For example, the program is downloaded to a mobile terminal device such as a smartphone, a tablet, and the like, an imaging device, a mobile phone, a personal computer, a game device, a video device, a personal digital assistant (PDA), and the like, and thus the smartphone and the like can be caused to function as the information processing device 70 constituting the image processing system of the present disclosure.

Note that the effects described in the present specification are merely examples and are not limited, and other effects may be exerted.

Note that the present technology can also have the following configurations.
(1) An information processing device including
   an image processing unit configured to perform processing of outputting, in response to a trigger, a virtual image generated on the basis of estimation information regarding a subject generated on the basis of at least one of a captured image or sensor information and a three-dimensional model of the subject in a case where a live-action image captured by an imaging device is output.
(2) The information processing device according to (1),
   in which the virtual image includes an image of a viewpoint different from a viewpoint of the imaging device that captures the live-action image.
(3) The information processing device according to (1) or (2),
   in which the image processing unit selectively performs processing of outputting the live-action image and processing of outputting the virtual image.
(4) The information processing device according to any one of (1) to (3),
   in which the image processing unit performs processing of automatically determining the trigger on the basis of input information and outputting the virtual image.
(5) The information processing device according to any one of (1) to (4),
   in which the image processing unit performs processing of determining occurrence of the trigger and outputting the virtual image in a case where a predetermined scene is not shown in the live-action image.
(6) The information processing device according to any one of (1) to (5),
   in which the image processing unit performs processing of determining occurrence of the trigger in accordance with an important scene determination result and outputting the virtual image as a playback image.
(7) The information processing device according to any one of (1) to (4),
   in which the image processing unit performs processing of determining occurrence of the trigger as a determination result of a selection condition for the live-action image or the virtual image, and outputting the virtual image in accordance with the determination for the occurrence of the trigger.
(8) The information processing device according to any one of (1) to (7),
   in which the image processing unit performs processing of determining occurrence of the trigger and outputting the virtual image in a case where a main subject to be displayed in the live-action image is not shown in the live-action image.
(9) The information processing device according to any one of (1) to (8),
   in which the image processing unit performs processing of determining a predetermined operation input as occurrence of the trigger, setting a viewpoint position on the basis of a viewpoint position of the live-action image, and outputting the virtual image.
(10) The information processing device according to any one of (1) to (9),
   in which the image processing unit performs processing of outputting the virtual image with a changed viewpoint in response to an operation input in a case where the virtual image is output.
(11) The information processing device according to any one of (1) to (10),
   in which the image processing unit performs processing of outputting the virtual image from a viewpoint of a specific subject in response to a designation operation of the specific subject in a case where the live-action image or the virtual image is output.
(12) The information processing device according to any one of (1) to (11),
   in which the image processing unit performs processing of outputting the virtual image while a predetermined operation input continues.
(13) The information processing device according to any one of (1) to (12),
   in which the image processing unit performs processing of displaying only a subject person related to a scene in the virtual image.
(14) The information processing device according to any one of (1) to (13),
   in which the image processing unit selectively performs processing of outputting the live-action image, processing of outputting the virtual image, and processing of outputting a live-action free viewpoint image using the three-dimensional model based on the live-action image.
(15) The information processing device according to any one of (1) to (14),
   in which the image processing unit performs processing of outputting both the live-action image and the virtual image.
(16) The information processing device according to any one of (1) to (15),
   in which the image processing unit
   performs processing of generating the virtual image on the basis of the estimation information regarding the subject generated on the basis of the captured image and the three-dimensional model of the subject.
(17) The information processing device according to any one of (1) to (16),
   in which the image processing unit
   performs processing of generating the estimation information regarding the subject on the basis of the captured image.
(18) An image processing method including, by an information processing device,
   performing processing of outputting, in response to a trigger, a virtual image generated on the basis of estimation information regarding a subject generated on the basis of at least one of a captured image or sensor information and a three-dimensional model of the subject in a case where a live-action image captured by an imaging device is output.
(19) A program causing an information processing device to execute
   processing of outputting, in response to a trigger, a virtual image generated on the basis of estimation information regarding a subject generated on the basis of at least one of a captured image or sensor information and a three-dimensional model of the subject in a case where a live-action image captured by an imaging device is output.

### REFERENCE SIGNS LIST

- 1: Image processing system
- 2: Estimation information generation unit
- 3: Virtual image generation unit
- 4: Image processing unit
- 10: Imaging device
- 21: Recording unit
- 12: FV generation unit
- 23, 24, 25, 26, 28, 29: Storage
- 22: EPTS data generation unit
- 27: 3D image generation unit
- 30: Image selection unit
- 31: Display unit
- 50: Live-action image
- 51: CG image
- 70: Information processing device
- 71: CPU
- 85: Image processing unit

## Claims

1. An information processing device comprising
an image processing unit configured to perform processing of outputting, in response to a trigger, a virtual image generated on a basis of estimation information regarding a subject generated on a basis of at least one of a captured image or sensor information and a three-dimensional model of the subject in a case where a live-action image captured by an imaging device is output.

2. The information processing device according to claim 1,
wherein the virtual image includes an image of a viewpoint different from a viewpoint of the imaging device that captures the live-action image.

3. The information processing device according to claim 1,
wherein the image processing unit selectively performs processing of outputting the live-action image and processing of outputting the virtual image.

4. The information processing device according to claim 1,
wherein the image processing unit performs processing of automatically determining the trigger on a basis of input information and outputting the virtual image.

5. The information processing device according to claim 1,
wherein the image processing unit performs processing of determining occurrence of the trigger and outputting the virtual image in a case where a predetermined scene is not shown in the live-action image.

6. The information processing device according to claim 1,
wherein the image processing unit performs processing of determining occurrence of the trigger in accordance with an important scene determination result and outputting the virtual image as a playback image.

7. The information processing device according to claim 1,
wherein the image processing unit performs processing of determining occurrence of the trigger as a determination result of a selection condition for the live-action image or the virtual image, and outputting the virtual image in accordance with the determination for the occurrence of the trigger.

8. The information processing device according to claim 1,
wherein the image processing unit performs processing of determining occurrence of the trigger and outputting the virtual image in a case where a main subject to be displayed in the live-action image is not shown in the live-action image.

9. The information processing device according to claim 1,
wherein the image processing unit performs processing of determining a predetermined operation input as occurrence of the trigger, setting a viewpoint position on a basis of a viewpoint position of the live-action image, and outputting the virtual image.

10. The information processing device according to claim 1,
wherein the image processing unit performs processing of outputting the virtual image with a changed viewpoint in response to an operation input in a case where the virtual image is output.

11. The information processing device according to claim 1,
wherein the image processing unit performs processing of outputting the virtual image from a viewpoint of a specific subject in response to a designation operation of the specific subject in a case where the live-action image or the virtual image is output.

12. The information processing device according to claim 1,
wherein the image processing unit performs processing of outputting the virtual image while a predetermined operation input continues.

13. The information processing device according to claim 1,
wherein the image processing unit performs processing of displaying only a subject person related to a scene in the virtual image.

14. The information processing device according to claim 1,
wherein the image processing unit selectively performs processing of outputting the live-action image, processing of outputting the virtual image, and processing of outputting a live-action free viewpoint image using the three-dimensional model based on the live-action image.

15. The information processing device according to claim 1,
wherein the image processing unit performs processing of outputting both the live-action image and the virtual image.

16. The information processing device according to claim 1,
wherein the image processing unit
performs processing of generating the virtual image on a basis of the estimation information regarding the subject generated on a basis of the captured image and the three-dimensional model of the subject.

17. The information processing device according to claim 1,
wherein the image processing unit
performs processing of generating the estimation information regarding the subject on a basis of the captured image.

18. An image processing method comprising, by an information processing device,
performing processing of outputting, in response to a trigger, a virtual image generated on a basis of estimation information regarding a subject generated on a basis of at least one of a captured image or sensor information and a three-dimensional model of the subject in a case where a live-action image captured by an imaging device is output.

19. A program causing an information processing device to execute
processing of outputting, in response to a trigger, a virtual image generated on a basis of estimation information regarding a subject generated on a basis of at least one of a captured image or sensor information and a three-dimensional model of the subject in a case where a live-action image captured by an imaging device is output.
